# EUROPÄISCHE PATENTSCHRIFT

(11) **EP 2 477 855 B1**
(45) Veröffentlichungstag und Bekanntmachung des Hinweises auf die Patenterteilung: **14.04.2021**
(21) Anmeldenummer: 10737024.9
(22) Anmeldetag: 22.07.2010
(51) Int. Cl.: B60S 1/40, B60S 1/38

(54) **WISCHBLATT MIT EINER ADAPTEREINHEIT ZUR ANLENKUNG AN EINEM WISCHERARM**
WIPER BLADE WITH AN ADAPTER UNIT FOR LINKING TO A WIPER ARM
BALAI D'ESSUIE-GLACE AVEC UNE UNITÉ ADAPTATEUR POUR L'ARTICULATION AVEC UN BRAS D'ESSUIE-GLACE

(30) Priorität: 15.09.2009 DE 102009029470
(43) Veröffentlichungstag der Anmeldung: 25.07.2012
(73) Patentinhaber: Robert Bosch GmbH, 70442 Stuttgart (DE)
(72) Erfinder: DEPONDT, Helmut, B-3001 Heverlee (BE)
(86) Internationale Anmeldenummer: PCT/EP2010/060626
(87) Internationale Veröffentlichungsnummer: WO 2011/032760

(56) Entgegenhaltungen:
- EP-A2- 1 995 130
- EP-A2- 2 143 603
- WO-A1-2006/069648
- DE-A1- 10 349 637
- DE-A1-102007 021 333
- US-A1- 2010 205 763

## Beschreibung

Die vorliegende Erfindung betrifft ein Wischblatt für einen Scheibenwischer, mit einer Wischleiste und einer Adaptereinheit zur Anlenkung der Wischleiste an einem Wischerarm, wobei die Adaptereinheit zur Verbindung mit einem dem Wischerarm zugeordneten Anschlussglied ausgebildet ist.

Die WO 2008/145481 A1 beschreibt ein derartiges Wischblatt, bei dem eine Adaptereinheit zur Anlenkung der Wischleiste an einem Wischerarm vorgesehen ist. Diese Adaptereinheit ist zur Verbindung mit einer Vielzahl unterschiedlicher Anschlussglieder ausgebildet, die mit unterschiedlichen Wischerarmtypen verbindbar sind.

Die DE 102007021333 A1 zeigt ebenfalls ein Wischblatt mit einer Adaptereinheit zum Anlenken einer Wischleiste an einem Wischarm, wobei ein Anschlussglied fest mit einem Wischarmende verbunden ist und über ein Lagermittel gelenkig mit einem Adapter verbunden ist, der fest auf einem Trageelement des Wischblatts sitzt.

WO 2006/069648 A1, DE 10349637 A1, EP 1995130 A2 und US 2010/0205763 A1 zeigen ebenfalls ein Wischblatt mit einer Adaptereinheit zur Anlenkung einer Wischleiste an einem Wischarm.

Nachteilig am Stand der Technik ist, dass eine Vielzahl unterschiedlicher Wischerarmtypen existiert und somit eine Vielzahl unterschiedlicher Anschlussglieder erforderlich ist.

### Offenbarung der Erfindung

Eine Aufgabe der Erfindung ist es daher, ein neues Wischblatt für einen Scheibenwischer bereit zu stellen, das auf einfache Art und Weise an eine Vielzahl unterschiedlicher Wischerarmtypen anlenkbar ist.

Dieses Problem wird gelöst durch ein Wischblatt für einen Scheibenwischer, mit den Merkmalen des Anspruchs 1.

Die Erfindung ermöglicht somit die Bereitstellung eines Wischblatts, das auf einfache Art und Weise an eine Vielzahl unterschiedlicher Wischerarmtypen anlenkbar ist.

Das Adapterelement ist bevorzugt dazu ausgebildet, das Basiselement zumindest abschnittsweise kappenartig zu umgreifen.

Somit kann ein unkompliziertes und kostengünstiges Adapterelement bereitgestellt werden.

Das Anschlussglied weist vorzugsweise ein Deckeiglied auf, mit dem das Adapterelement an dem Basiselement fixierbar ist.

Somit kann das Adapterelement auf einfache Art und Weise an dem Basiselement befestigt werden.

Gemäß einer Ausführungsform ist das Deckelglied zur Fixierung einer Mehrzahl unterschiedlicher Wischerarmtypen an dem Anschlussglied ausgebildet.

Die Erfindung ermöglicht somit eine sichere und zuverlässige Fixierung von unterschiedlichen Wischerarmtypen an dem Wischblatt.

Das Deckelglied ist bevorzugt drehbeweglich am Basiselement lagerbar.

Somit kann das Deckelglied auf einfache Art und Weise am Anschlussglied angeordnet werden.

Das Deckelglied ist vorzugsweise am Basiselement verrastbar.

Somit kann das Deckelglied einfach und sicher am Basiselement befestigt werden.

Gemäß einer Ausführungsform weist die Adaptereinheit ein Lagerelement auf, an dem das Anschlussglied lagerbar ist.

Die Adaptereinheit ist somit auf einfache Art und Weise mit dem Anschlussglied verbindbar.

Das Anschlussglied weist bevorzugt Positionierhilfen zur Positionierung am Lagerelement auf.

Somit kann eine schnelle und korrekte Positionierung des Anschlussglieds an der Adaptereinheit erreicht werden.

Gemäß einer Ausführungsform weist die Adaptereinheit ein Führungs- und Positionierglied zur Ausrichtung des Anschlussglieds an der Adaptereinheit auf.

Die Erfindung ermöglicht somit eine einfache und präzise Montage des Anschlussglieds an der Adaptereinheit.

Das Führungs- und Positionierglied ist bevorzugt turmartig ausgebildet und das Anschlussglied weist vorzugsweise eine Durchbrechung zur Durchführung des turmartigen Führungs- und Positionierglieds auf.

Somit kann ein unkompliziertes und kostengünstiges Führungs- und Positionierglied bereitgestellt werden.

Die Adaptereinheit ist bevorzugt dauerhaft an einer an der Wischleiste vorgesehenen Basisanschlussvorrichtung befestigbar.

Somit kann eine sichere und zuverlässige Verbindung zwischen der Adaptereinheit und der Wischleiste ermöglicht werden.

Das Eingangs genannte Problem wird auch gelöst durch ein Anschlussglied zur Anlenkung eines Wischerarms an einem Wischblatt für einen Scheibenwischer. Das Wischblatt weist eine Wischleiste und eine Adaptereinheit zur Verbindung der Wischleiste mit dem Anschlussglied auf. Das Anschlussglied weist ein Basiselement mit Blockiergliedern und Blockierelementen und ein Adapterelement mit einer Längsnut und/oder einer Quernut sowie einer Öffnung auf, wobei das Basiselement zur Anlenkung der Wischleiste an eine erste Vielzahl unterschiedlicher Wischerarmtypen ausgebildet ist, die zur Blockierung an den Blockiergliedern und/oder Blockierelementen jeweils zumindest eine Halteschiene und/oder ein längliches Verbindungsstück mit Halteschultern aufweisen. Das Basiselement ist mit dem Adapterelement verbindbar, um eine Anlenkung der Wischleiste an eine zweite Vielzahl unterschiedlicher Wischerarmtypen zu ermöglichen, die sich von den Wischerarmtypen der ersten Vielzahl von Wischerarmtypen zumindest teilweise unterscheiden und zur Anlenkung an die Wischleiste jeweils zumindest eine Drehwelle zur Anordnung in der Öffnung des Adapterelements und/oder ein längliches Verbindungsstück zur Anordnung in der Längsnut des Adapterelements und/oder ein Längselement mit einer Positionieröffnung aufweisen.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine Seitenansicht eines Wischblatts mit einer Wischleiste, an der eine Basisanschlussvorrichtung befestigt ist, und einer daran befestigten Adaptereinheit, die an einem einem Wischerarm zugeordneten Anschlussglied befestigt ist, gemäß der Erfindung,
Fig. 2 eine perspektivische Ansicht eines Ausschnitts 11 des Wischblatts von Fig. 1 im montierten Zustand gemäß einer nicht der vorliegenden Erfindung gehörenden Ausführung,
Fig. 3 eine perspektivische Ansicht des Wischblattausschnitts von Fig. 2, mit der mit der Basisanschlussvorrichtung versehenen Wischleiste und der mit einem Führungs- und einem Funktionsadapter versehenen Adaptereinheit gemäß einer nicht der vorliegenden Erfindung gehörenden Ausführung im unmontierten Zustand,
Fig.4 eine perspektivische Ansicht einer Unterseite des Führungsadapters von Fig.3,
Fig. 5 eine perspektivische, teilweise transparente Ansicht des Funktionsadapters von Fig. 3,
Fig. 6 eine perspektivische Ansicht des Wischblattausschnitts von Fig. 2 bei der Montage der Adaptereinheit von Fig. 3,
Fig. 7 eine perspektivische Ansicht des Anschlussglieds von Fig. 1 gemäß einer nicht der vorliegenden Erfindung gehörenden Ausführung,
Fig. 8 eine perspektivische Ansicht des Wischblattausschnitts von Fig. 2 bei der Montage des Anschlussglieds von Fig. 7,
Fig. 9 eine perspektivische Ansicht des Wischblattausschnitts von Fig. 2 mit dem Anschlussglied von Fig. 7 im montierten Zustand,
Fig. 10 eine perspektivische Ansicht des Anschlussglieds von Fig. 7 bei der Anlenkung an einem ersten Wischerarmtyp,
Fig. 11 eine perspektivische Ansicht des Anschlussglieds von Fig. 7 bei der Anlenkung an einem zweiten Wischerarmtyp,
Fig. 12 eine perspektivische Ansicht des Anschlussglieds von Fig. 7 bei der Anlenkung an einem dritten Wischerarmtyp,
Fig. 13 eine perspektivische Ansicht des Anschlussglieds von Fig. 7 bei der Anlenkung an einem vierten Wischerarmtyp,
Fig. 14 eine perspektivische Ansicht eines Ausschnitts II des Wischblatts von Fig. 1, mit der mit der Basisanschlussvorrichtung versehenen Wischleiste, sowie einer Adaptereinheit und einem Anschlussglied gemäß einer Ausführungsform, im unmontierten Zustand,
Fig. 15 eine perspektivische Ansicht des Wischblattausschnitts von Fig. 14 bei der Montage des Anschlussglieds,
Fig. 16 eine perspektivische Ansicht des Wischblattausschnitts von Fig. 15 mit dem Anschlussglied bei der Anlenkung an einem ersten Wischerarmtyp,
Fig. 17 eine perspektivische Ansicht des Wischblattausschnitts von Fig. 15 mit dem Anschlussglied bei der Anlenkung an einem zweiten Wischerarmtyp,
Fig. 18 eine perspektivische Ansicht des Wischblattausschnitts von Fig. 15 mit dem Anschlussglied bei der Anlenkung an einem dritten Wischerarmtyp,
Fig. 19 eine perspektivische Ansicht des Wischblattausschnitts von Fig. 15 mit dem Anschlussglied bei der Anlenkung an einem vierten Wischerarmtyp, und
Fig. 20 eine perspektivische Ansicht des Wischblattausschnitts von Fig. 15 mit dem Anschlussglied bei der Anlenkung an einem fünften Wischerarmtyp.

### Beschreibung der Ausführungsbeispiele

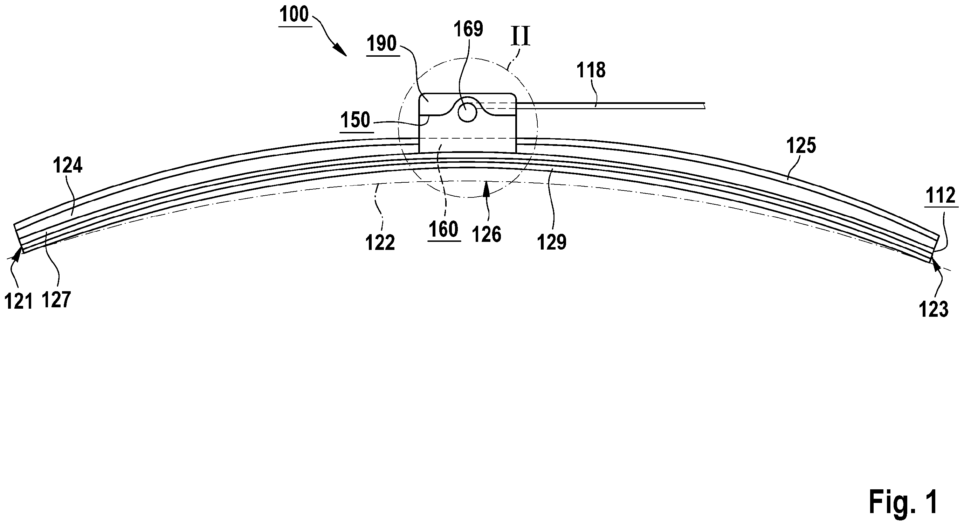

Fig. 1 zeigt ein Wischblatt 100 mit einer Wischleiste 112, die eine über einen Kippsteg 127 mit einer Rückenleiste 124 verbundene Wischlippe 129 aufweist. An der Rückenleiste 124 ist ein Spoiler 125 vorgesehen. An der Wischleiste 112 ist eine Basisanschlussvorrichtung 160 vorgesehen, an der eine Adaptereinheit 150 zum Anschließen eines einem Wischerarm 118 zugeordneten Anschlussglieds 190 befestigt ist. Das Anschlussglied 190 ist in Fig. 1 beispielhaft über einen Gelenkbolzen 169 an der Adaptereinheit 150 angeschlossen. Mit Hilfe des Wischerarms 118 kann das Wischblatt 100 zum Wischen über eine strichpunktiert dargestellte Scheibe 122, z.B. eine Kraftfahrzeugscheibe, geführt werden.

Gemäß einer nicht der vorliegenden Erfindung gehörenden Ausführung ist das Wischblatt 100 in Flachbalkenbauweise ausgebildet, d.h. die Wischleiste 112 weist seitliche Längsnuten auf, in denen zwei Tragschienen, vorzugsweise Federschienen, angeordnet sind. Alternativ hierzu kann die Wischleiste 112 als Hohlprofil mit einem etwa zentralen Längskanal ausgebildet sein, in dem eine einzelne Tragschiene angeordnet ist. Die Wischleiste 112 mit der daran vorgesehenen Basisanschlussvorrichtung 160 ist bevorzugt gelenkfrei ausgebildet, wobei die Basisanschlussvorrichtung 160 vorzugsweise an der Wischleiste 112 vormontiert ist.

In Fig. 1 ist das Wischblatt 100 noch nicht vollständig auf die Scheibe 122 aufgesetzt, es liegen nur dessen axiale Wischblattenden 121, 123 an der Scheibe 122 an, während die Wischleiste 112 in Wischblattmitte 126, d.h. etwa im Bereich der Adaptereinheit 150, noch von der Scheibe 122 beabstandet ist. Wird über den Wischerarm 118 eine vorgesehene Anpresskraft auf das Anschlussglied 190 und somit die Adaptereinheit 150 ausgeübt, legt sich die Wischleiste 112 an der Scheibe 122 an. Hierbei wird ein gleichmäßiger Anpressdruck über die gesamte Wischblattlänge erreicht, auch wenn sich die Scheibenkrümmung im Verlauf der Wischbewegung ändert.

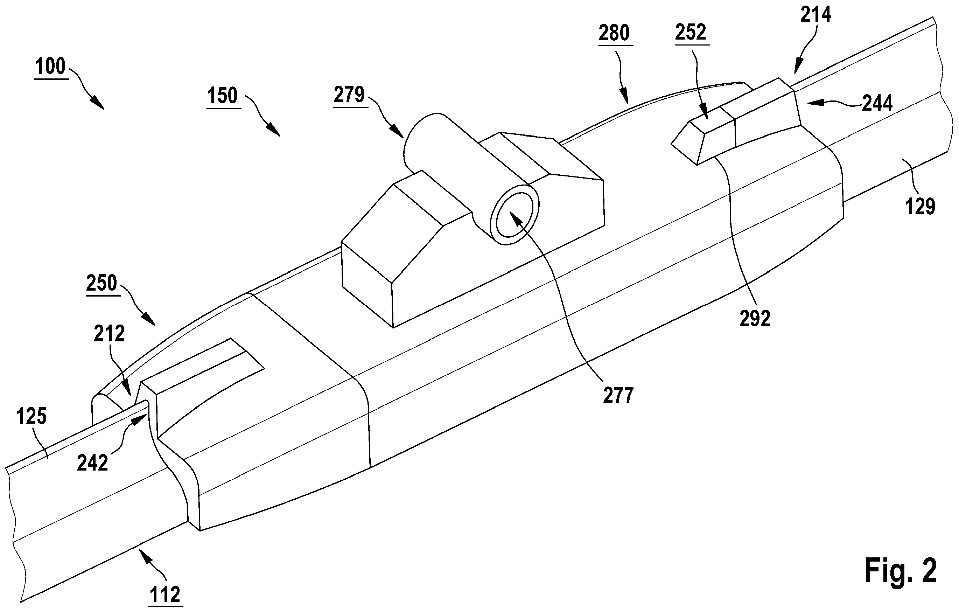

Fig. 2 zeigt einen in Fig. 1 mit II gekennzeichneten Ausschnitt des Wischblatts 100 mit der Wischleiste 112 und der Adaptereinheit 150 gemäß einer Ausführungsform im montierten Zustand. Die Adaptereinheit 150 weist einen Führungsadapter 250 und einen Funktionsadapter 280 auf.

Der Führungsadapter 250 ist illustrativ dauerhaft an der Basisanschlussvorrichtung 160 von Fig. 1 befestigt. Unter "dauerhaft" ist im Kontext der vorliegenden Erfindung zu verstehen, dass keine Mittel zum Loslösen des Führungsadapters 250 von der Basisanschlussvorrichtung 160 vorgesehen sind, sodass ein gewaltfreies Lösen bevorzugt nicht möglich ist. Es wird jedoch darauf hingewiesen, dass alternativ eine lösbare Verbindung zwischen Führungsadapter 250 und Basisanschlussvorrichtung 160 von Fig. 1 Anwendung finden kann, z. B. eine Rastverbindung über geeignete Rast- und Gegenrastmittel.

An einem in Fig. 2 links gezeigten axialen Endbereich des Führungsadapters 250 ist zumindest bereichsweise eine Aufnahmenut 242 zur Aufnahme eines ersten Endbereichs 212 des Spoilers 125 ausgebildet. An seinem in Fig. 2 rechts gezeigten axialen Endbereich ist ein betätigbares Rastelement 252 ausgebildet.

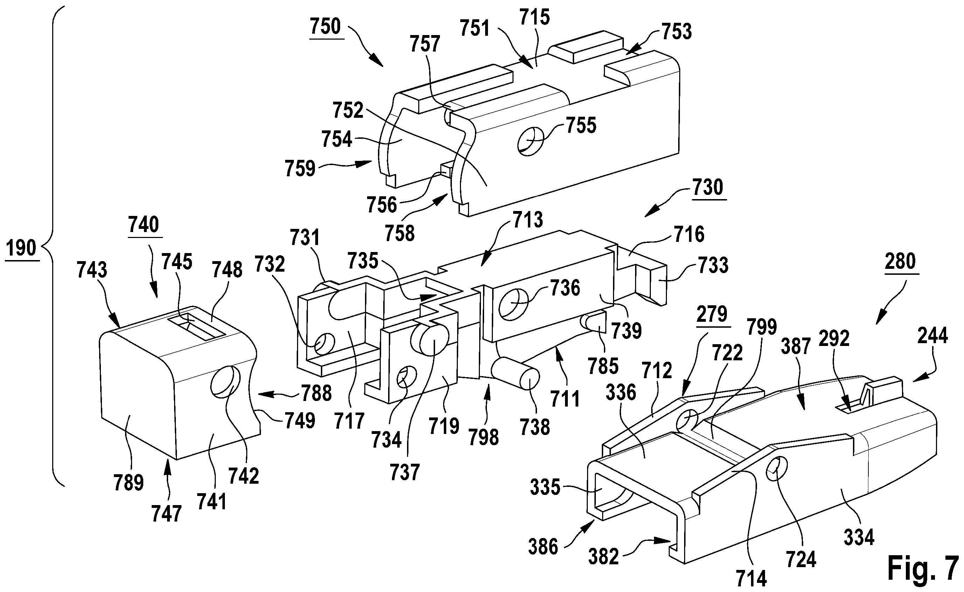

Der Funktionsadapter 280 weist illustrativ ein Lagerelement 279 auf, an dem das Anschlussglied 190 von Fig. 1 lagerbar ist. Das Lagerelement 279 hat beispielhaft eine kreisförmige Durchbrechung 277, durch die z. B. der Gelenkbolzen 169 von Fig. 1 durchführbar ist. Es wird jedoch darauf hingewiesen, dass das Lagerelement 279 mit der Durchbrechung 277 in Fig. 2 lediglich beispielhaft abgebildet ist und nicht zur Einschränkung der Erfindung. Vielmehr kann das Lagerelement 279 eine Vielzahl unterschiedlicher Ausgestaltungen aufweisen, die z. B. von einer Ausgestaltung des Anschlussglieds 190 von Fig.1 abhängig sein können, wie beispielhaft bei Fig. 7 beschrieben.

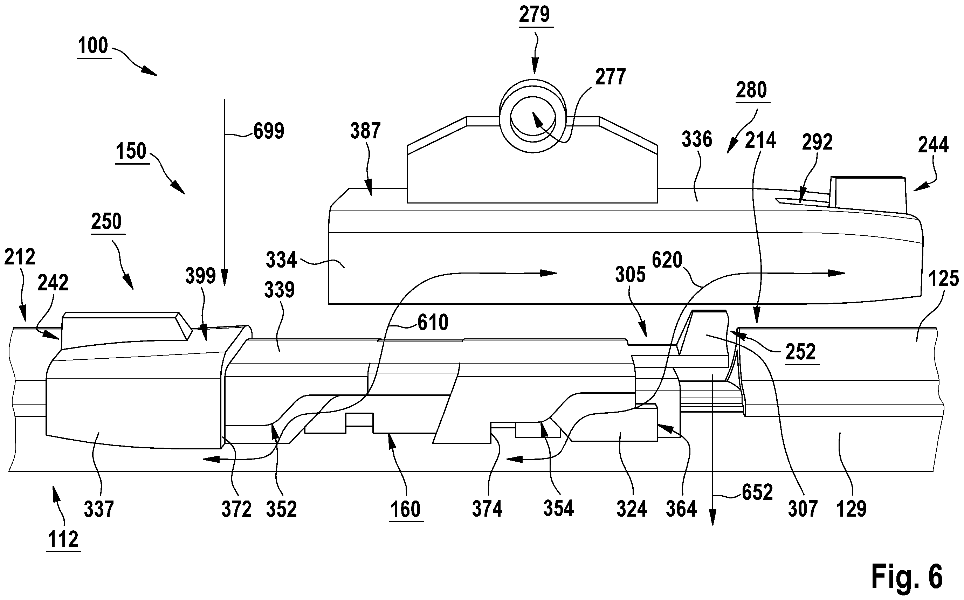

Am in Fig. 2 rechts gezeigten axialen Endbereich des Funktionsadapters 280 ist eine Aussparung 292 zur zumindest teilweisen Aufnahme des Rastelements 252 vorgesehen. Gemäß einer Ausführungsform ist der Funktionsadapter 280 lösbar mit dem Führungsadapter 250 verbunden, wie unten stehend bei Fig. 6 im Detail beschrieben. Darüber hinaus ist in diesem Endbereich zumindest bereichsweise eine Aufnahmenut 244 zur Aufnahme eines zweiten Endbereichs 214 des Spoilers 125 ausgebildet.

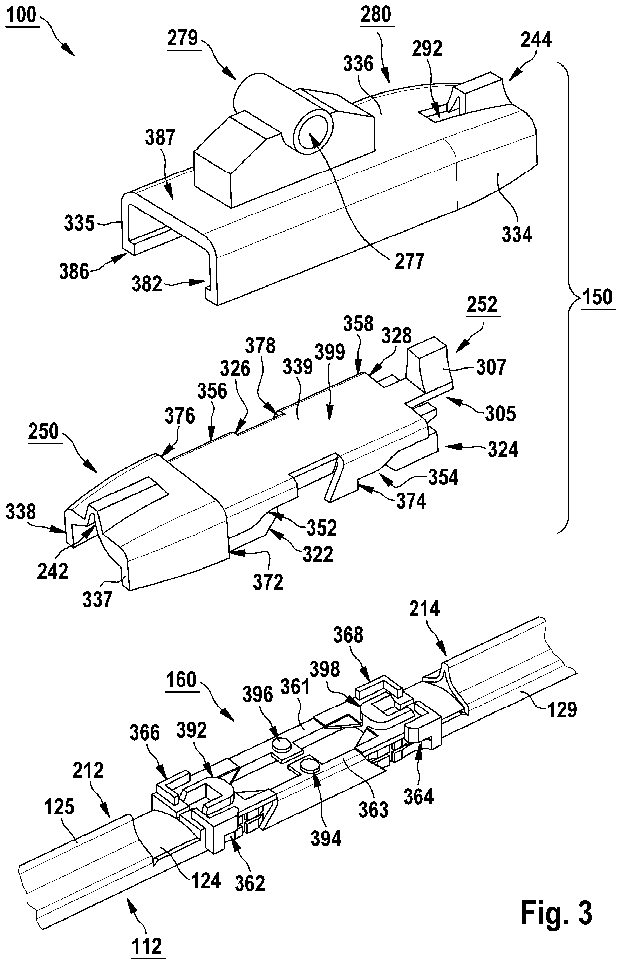

Fig. 3 zeigt den Wischblattausschnitt von Fig. 2 mit der Wischleiste 112 und der daran befestigten Basisanschlussvorrichtung 160, sowie der Adaptereinheit 150 im unmontierten Zustand. Fig. 3 verdeutlicht die der Basisanschlussvorrichtung 160 zugewandten Endbereiche 212, 214 des Spoilers 125.

Die Basisanschlussvorrichtung 160 besteht beispielhaft aus einer ersten Anschlussschiene 361 und einer zweiten Anschlussschiene 363. Die Anschlussschienen 361, 363 umgreifen zumindest abschnittsweise die mit der Wischlippe 129 verbundene Rückenleiste 124 der Wischleiste 112 und sind vorzugsweise fest aneinander und somit an der Rückenleiste 124 verankert, z.B. dauerhaft verrastet. Zur dauerhaften Verrastung weisen die Schienen 361, 363 bevorzugt geeignete Rast- bzw. Gegenrastmittel auf. Es wird jedoch darauf hingewiesen, dass die Verankerung der Schienen 361, 363 aneinander auch mit anderen, äquivalenten Mitteln erreichbar ist, z.B. mit Schnapp- oder Klemmverbindungen. Deshalb ist die vorliegende Erfindung nicht auf die Verwendung von Rast- und Gegenrastmitteln beschränkt.

Zur dauerhaften Befestigung des Führungsadapters 250 an der Basisanschlussvorrichtung 160 sind an dieser mehrere schulterförmige Haltebuchten 362, 364, 366, 368 vorgesehen. In den axialen Endbereichen der Basisanschlussvorrichtung 160 sind säulenartige Vorsprünge 392, 398 ausgebildet und in ihrem zentralen Bereich sind beispielhaft zwei stiftförmige Vorsprünge 394, 396 vorgesehen. Diese Vorsprünge 392, 394, 396, 398 dienen als Positionierelemente, um eine präzise Ausrichtung und Montage des Führungsadapters 250 zu ermöglichen, wie unten stehend bei Fig. 6 beschrieben. Darüber hinaus weisen zumindest die Positionierelemente 394, 396 gemäß einer Ausführungsform z. B. stiftartige Fortsätze auf, die in Richtung der Wischleiste 112 ausgebildet sind und bei einer Befestigung der Basisanschlussvorrichtung 160 an der Wischleiste 112 fixierbar sind, um somit ein Verrutschen der Vorrichtung 160 an der Wischleiste 112 zu verhindern. Hierbei können die Fortsätze z. B. nagelartig in die Wischleiste eingepresst werden oder dort durch Verdrängung des Gummimaterials der Wischleiste 112 verankert werden.

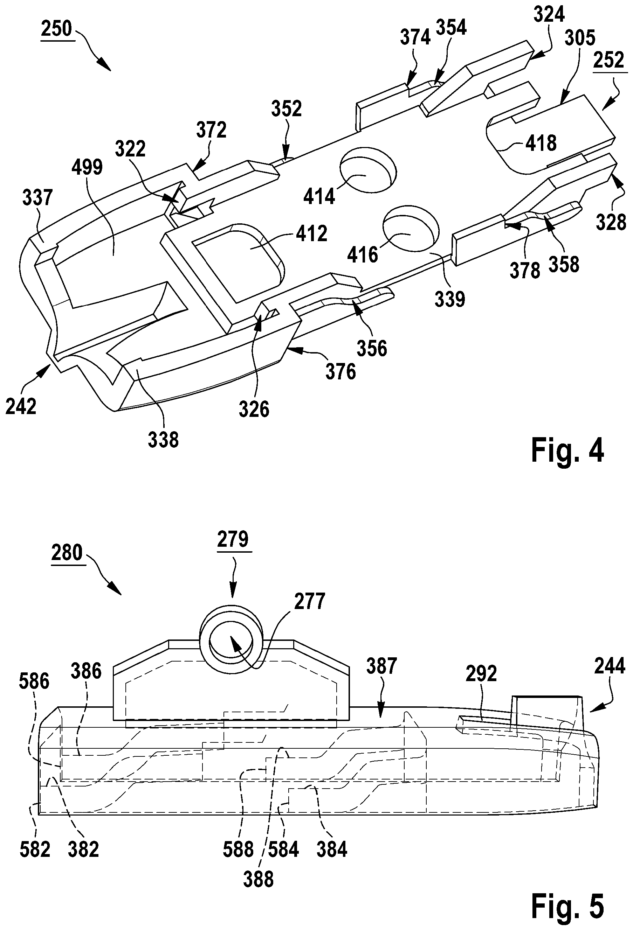

Die Adaptereinheit 150 mit dem Führungsadapter 250 und dem Funktionsadapter 280, deren Oberseiten 387 bzw. 399 in Fig. 3 gezeigt sind, ist z.B. aus Kunststoff hergestellt. Der Führungsadapter 250 ist beispielhaft nach Art eines umgedrehten U-Profils ausgebildet und weist ein Plattformartiges Basiselement 339 auf, an dem zwei laterale Wandelemente 337, 338 ausgebildet sind. Des Weiteren ist an der Plattform 339 das Rastelement 252 schwanzartig ausgebildet, das beispielhaft eine federnde Rastzunge 305 mit einem Rastnocken 307 aufweist. An den Wandelementen 337, 338 sind Führungselemente 352, 354 bzw. 356, 358 vorgesehen, die zumindest abschnittsweise Raumkurvenförmig ausgebildet sind. Diese sind bevorzugt unstetig geneigt und illustrativ zumindest abschnittsweise langgestreckt S-förmig ausgebildet. Die Führungselemente 352, 354, 356, 358 sind mit zugeordneten Blockiergliedern 372, 374, 376, 378 versehen, deren Funktion unten stehend bei Fig. 6 beschrieben wird. Zur dauerhaften Befestigung des Führungsadapters 250 an der Basisanschlussvorrichtung 160 sind an den Wandelementen 337, 338 Haltearme 322, 324 bzw. 326, 328 (Fig. 4) vorgesehen.

Der Funktionsadapter 280 ist beispielhaft schlittenartig ausgebildet und hat ein Trägerelement 336, an dem zwei laterale, kufenartige Wandelemente 334, 335 vorgesehen sind. An diesen kufenartigen Wandelementen 334, 335 sind Gleitelemente 382, 384 (Fig. 5) bzw. 386, 388 (Fig. 5) ausgebildet. Diese sind bevorzugt mit einer im Wesentlichen identischen Formgebung wie die Führungselemente 352, 354, 356, 358 ausgebildet. Dementsprechend sind die Gleitelemente 382, 386 und 384, 388 (Fig. 5) zumindest abschnittsweise Raumkurvenförmig, vorzugsweise unstetig geneigt und bevorzugt zumindest abschnittsweise langgestreckt S-förmig ausgebildet.

Fig. 4 zeigt die Unterseite 499 des Führungsadapters 250. Fig. 4 verdeutlicht die Raumkurvenförmige Ausgestaltung der Führungselemente 356, 358, die zugeordneten Anschlagglieder 376 bzw. 378, die Längsnut 242 sowie die Haltearme 322, 324, 326, 328.

An der Unterseite 499 des Führungsadapters 250 sind illustrativ taschenartige Aufnahmeelemente 412, 414, 416, 418 ausgebildet. Diese dienen zur Aufnahme der an der Basisanschlussvorrichtung 160 von Fig. 3 ausgebildeten Vorsprünge 392, 394, 396 bzw. 398.

Fig. 5 zeigt den Funktionsadapter 280 von Fig. 3 mit der Längsnut 244, der Aussparung 292, dem Lagerelement 279 und den Gleitelementen 382, 384, 386, 388. Diese sind wie oben beschrieben zumindest abschnittweise Raumkurvenförmig ausgebildet und hier illustrativ zumindest abschnittsweise langgestreckt S-förmig.

Die Gleitelemente 382, 384, 386, 388 weisen beispielhaft zugeordnete Anschlagglieder 582, 584, 586 bzw. 588 auf. Diese wirken mit den Blockiergliedern 372, 374, 376, 378 (Fig. 4) des Führungsadapters 250 von Fig. 4 zusammen, um eine Verschiebung des Funktionsadapters 280 relativ zum Führungsadapter 250 von Fig. 4 zumindest einzuschränken.

Fig. 6 zeigt den Wischblattausschnitt von Fig. 2 bzw. 3 bei einer Montage der Adaptereinheit 150 an der Basisanschlussvorrichtung 160. Hierzu wird in einem ersten Schritt der Führungsadapter 250 in Richtung eines Pfeils 699 auf die Vorrichtung 160 aufgedrückt bzw. geschoben. Hierbei verformen sich die Haltearme 322, 324, 326, 328 (Fig. 4) des Führungsadapters 250 aus einer Ausgangsform heraus zunächst elastisch, bis sie in die zugeordneten Haltebuchten 362, 364, 366, 368 (Fig. 3) der Basisanschlussvorrichtung 160 eingreifen. Dort nehmen sie erneut ihre Ausgangsform an und verhaken sich somit in den Haltebuchten 362, 364, 366, 368 (Fig. 3), sodass eine dauerhafte Schnappverbindung zwischen dem Führungsadapter 250 und der Basisanschlussvorrichtung 160 hergestellt ist. Gleichzeitig greifen die Vorsprünge 392, 394, 396, 398 (Fig. 3) der Basisanschlussvorrichtung 160 in die taschenartigen Aufnahmeelemente 412, 414, 416, 418 (Fig. 4) des Führungsadapters 250 ein, sodass dieser rutschfest und präzise an der Basisanschlussvorrichtung 160 ausgerichtet ist. Des Weiteren ist der Endbereich 212 des Spoilers 125 nun in der Längsnut 242 des Führungsadapters 250 aufgenommen, während sein Endbereich 214 noch freiliegt.

In einem zweiten Schritt wird der Funktionsadapter 280 in Richtung des Pfeils 699 derart auf dem Führungsadapter 250 positioniert, dass die Gleitelemente 382, 384, 386, 388 (Fig. 5) im Bereich der Führungselemente 352, 354, 356, 358 (Fig. 4) angeordnet sind. Dann wird der Funktionsadapter 280 durch eine kombinierte Translations- und Rotationsbewegung relativ zu dem Führungsadapter 250 in Richtung von Pfeilen 610, 620 derart bewegt, dass die Gleitelemente 382, 384, 386, 388 (Fig. 5) an den Führungselementen 352, 354, 356, 358 entlang gleitend verschoben werden. Hierbei wird der Funktionsadapter 280 von einer in Fig. 6 dargestellten Freigabeposition schlittenartig in eine in Fig. 2 dargestellte Halteposition verschoben, in der die Anschlagglieder 382, 384, 386, 388 (Fig. 5) des Funktionsadapters 280 von den Blockiergliedern 372, 374, 376, 378 (Fig. 4) des Führungsadapters 250 blockiert werden.

Bei der Verschiebung des Funktionsadapters 280 von der Freigabeposition in die Halteposition wird das betätigbare Rastelement 252 zunächst elastisch in Richtung eines Pfeils 652 verformt. Hierbei wird durch Druck des Funktionsadapters 280 gegen den Rastnocken 307 die Rastzunge 305 von einer Ausgangslage federnd in Richtung des Pfeils 652 ausgelenkt. Bei Erreichen der Halteposition des Funktionsadapters 280 federt die Rastzunge 305 wieder in ihre Ausgangslage zurück, d. h. in entgegen gesetzter Richtung zum Pfeil 652, wobei der Rastnocken 307 durch die Aussparung 292 des Funktionsadapters 280 durchgreift und dort lösbar verrastet, wie in Fig. 2 gezeigt. Der Rastnocken 307 verhindert nun eine Umkehrbewegung des Funktionsadapters 280 in Richtung der Pfeile 610, 620. Darüber hinaus ist der Endbereich 214 des Spoilers 125 nun in der Längsnut 244 des Funktionsadapters 280 aufgenommen.

Wie oben bei Fig. 2 beschrieben, ist das Rastelement 252 des Führungsadapters 250 lösbar am Funktionsadapter 280 verrastet. Diese lösbare Verrastung kann durch Betätigung des Rastelements 252 gelöst werden. Hierzu muss der Rastnocken 307 in Richtung des Pfeils 652 aus der Aussparung 292 heraus gedrückt werden, um eine gleitende Verschiebung des Funktionsadapters 280 relativ zum Führungsadapter 250 entlang der Pfeile 610, 620 von der Halteposition in die Freigabeposition zu ermöglichen.

Fig. 7 zeigt den Funktionsadapter 280 von Fig. 2 und 3 mit einem beispielhaft ausgebildeten Lagerelement 279 zur Verbindung mit dem gemäß einer ersten Ausführungsform ausgebildeten Anschlussglied 190 von Fig. 1. Das Lagerelement 279 weist in Fig. 7 mindestens zwei parallel zueinander ausgerichtete Wandelemente 712, 714 zur zumindest abschnittsweisen lateralen Abstützung des Anschlussglieds 190 auf. In den Wandelementen 712, 714 sind z. B. kreisförmige Öffnungen 722, 724 vorgesehen, zwischen denen eine an dem Trägerelement 336 vorgesehene, taschenartige Ausnehmung 799 ausgebildet ist.

Das Anschlussglied 190 weist beispielhaft ein an dem Funktionsadapter 280 lagerbares Basiselement 730 auf, das mit einem Deckelglied 740 und einem Adapterelement 750 verbindbar ist. Das Basiselement 730 ist bevorzugt über eine Schnappverbindung an dem Funktionsadapter 280 befestigbar und wird deshalb nachfolgend auch als "Befestigungsglied" bezeichnet. Gemäß einer Ausführungsform sind das Befestigungsglied 730, das Deckelglied 740 und das Adapterelement 750 aus Kunststoff hergestellt, z. B. durch Kunststoffspritzen. Es können jedoch auch andere Herstellungsverfahren und Werkstoffe bzw. Werkstoffkombinationen Anwendung finden.

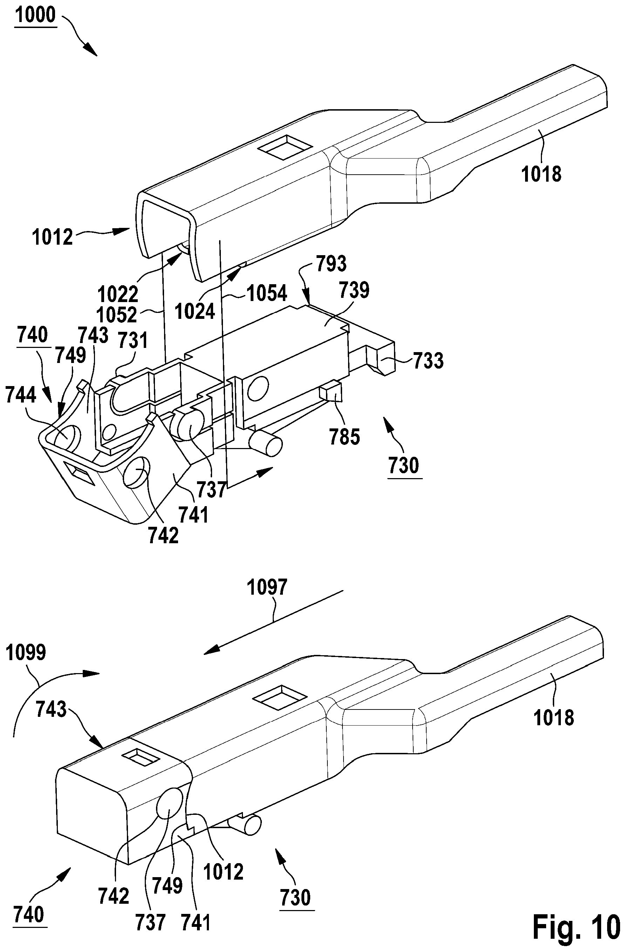

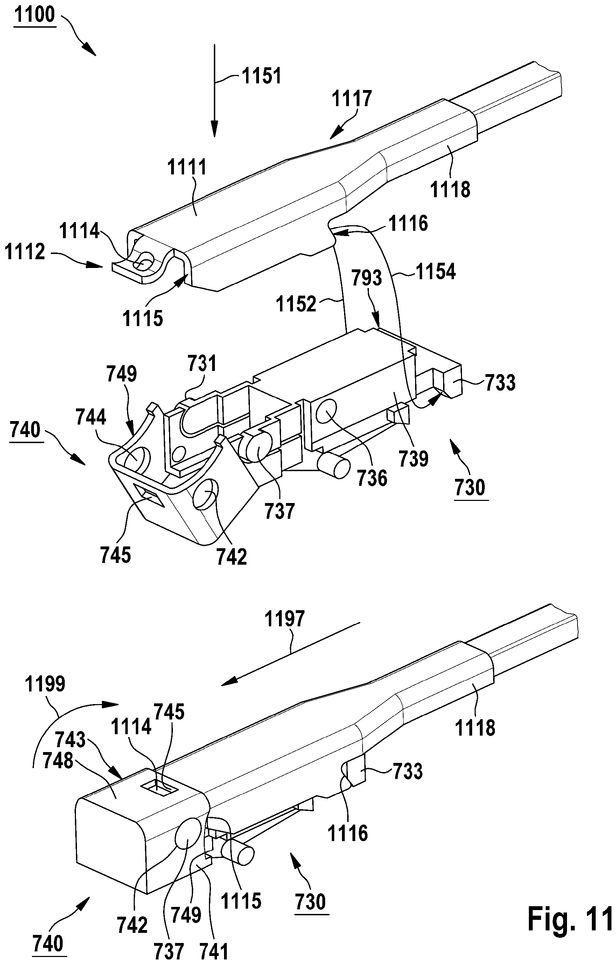

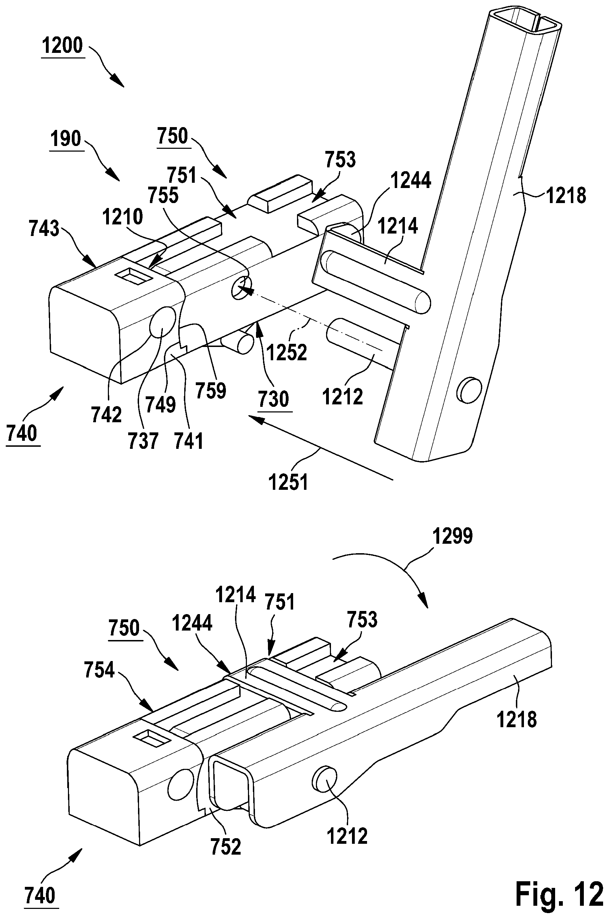

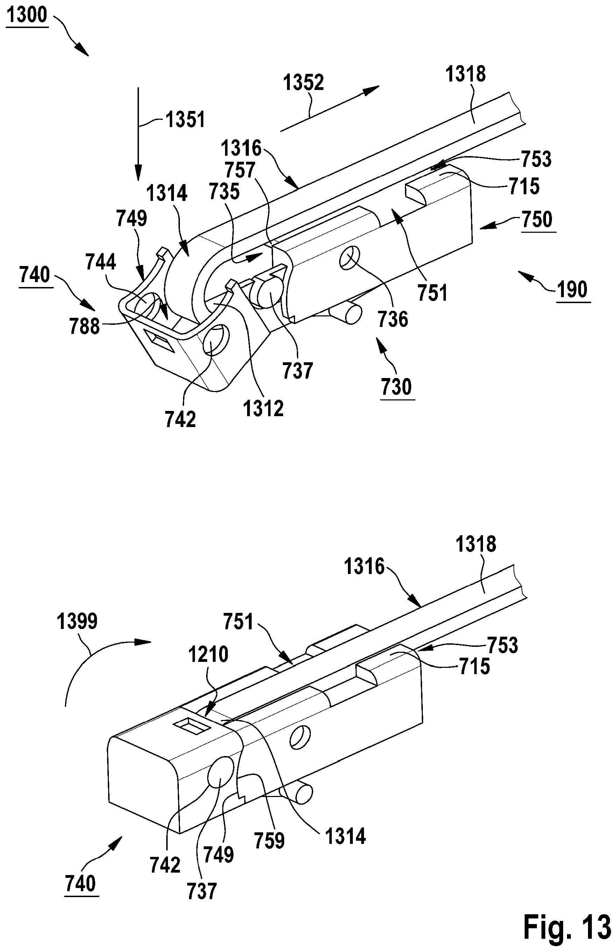

Das Befestigungsglied 730 ist beispielhaft zur Anlenkung an eine erste Vielzahl unterschiedlicher Wischerarmtypen ausgebildet, wie unten stehend bei Fig. 10 und 11 beschrieben. Das Adapterelement 750 ist beispielhaft zur Anlenkung an eine zweite Vielzahl unterschiedlicher Wischerarmtypen ausgebildet, die sich von den Wischerarmtypen der ersten Vielzahl von Wischerarmtypen unterscheiden, wie unten stehend bei Fig. 12 und 13 beschrieben. Das Deckelglied 740 ist beispielhaft zur Fixierung von unterschiedlichen Wischerarmtypen an dem Befestigungsglied 730 bzw. dem Adapterelement 750 ausgebildet.

Gemäß einer nicht der vorliegenden Erfindung gehörenden Ausführung ist an einer Unterseite 711 des Befestigungsglieds 730 ein Lagerglied 798 mit einer Formgebung vorgesehen, die beispielhaft der Formgebung der taschenartigen Ausnehmung 799 entspricht. Das Lagerglied 798 weist eine Welle 738 auf, die zur Aufnahme in den kreisförmigen Öffnungen 722, 724 ausgebildet ist. Alternativ hierzu können anstelle einer durchgehenden Welle 738 auch zwei stift- bzw. zylinderförmige, laterale Vorsprünge am Befestigungsglied 730 ausgebildet sein. An einem axialen Endbereich des Lagerglieds 798 sind seitliche Blockierelemente ausgebildet, von denen in Fig. 7 nur das Blockierelement 785 sichtbar ist.

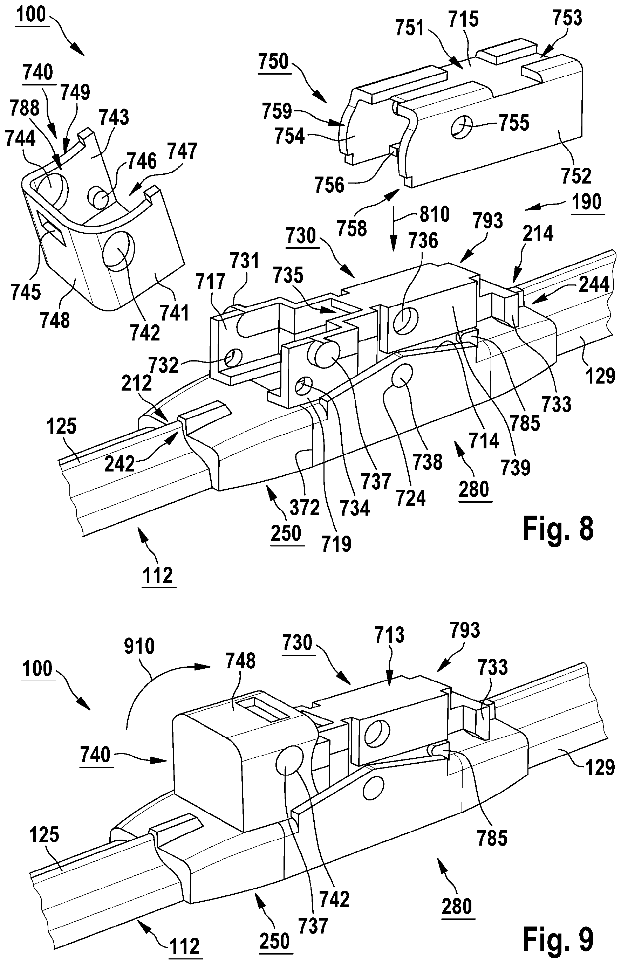

Das Lagerglied 798 ist an einen zumindest abschnittsweise als Hohlprofil ausgebildeten Trägerblock 739 mit einem Hohlraum 735 angeformt, der eine Durchgangsöffnung bzw. -bohrung 736 aufweist und eine bevorzugt flache Oberseite 713 hat. Am in Fig. 7 rechten axialen Endbereich des Trägerblocks 739 sind laterale Blockierelemente 733 und 793 (Fig. 8) ausgebildet, die beispielhaft über eine T-förmige Verlängerung 716 an den Trägerblock 739 angeformt sind. Am in Fig. 7 linken axialen Endbereich des Trägerblocks 739 sind laterale, beispielhaft L-förmige Verbindungselemente 717, 719 angeformt. Diese weisen jeweils eine kreisförmige Öffnung 732 bzw. 734 und einen stiftartigen Vorsprung 731 bzw. 737 zur Verbindung mit dem Deckelglied 740 auf.

Das Deckelglied 740 ist beispielhaft nach Art einer würfelförmigen Haube ausgebildet, mit einem oberen Wandelement 748 und Seitenwänden 741, 743, die über eine Abschlusswand 789 miteinander verbunden sind. Die dem oberen Wandelement 748 und der Abschlusswand 789 gegenüberliegenden Seiten 747 bzw. 788 sind offen. In dem oberen Wandelement 748 ist eine Öffnung 745 vorgesehen. In den Seitenwänden 741, 743 sind Öffnungen 742 bzw. 744 (Fig. 8) zur Aufnahme der Vorsprünge 737 bzw. 731 bei einer Befestigung des Deckelglieds 740 am Befestigungsglied 730 vorgesehen. Die der offenen Seite 788 zugewandten Endbereiche 749 der Seitenwände 741, 743 sind illustrativ konkav geformt. Gemäß einer Ausführungsform ist das Deckelglied 740 zur Fixierung des Adapterelements 750 am Befestigungsglied 730 ausgebildet.

Das Adapterelement 750 ist beispielhaft als Hohl- oder U-Profil mit einem Deckenelement 715 ausgebildet, an dem zwei laterale Wandelemente 752, 754 angeformt sind, an denen wiederum Haltestege 758 bzw. 756 vorgesehen sind. Das Deckenelement 715 ist mit einer Längsnut 753 und einer Quernut 751 versehen. Die Wandelemente 752, 754 weisen bevorzugt kreisförmige Öffnungen auf, von denen in Fig. 7 nur die in dem Wandelement 752 vorgesehene Öffnung 755 sichtbar ist. An ihren nach einer Montage am Befestigungsglied 730 dem Deckelglied 740 zugewandten Endbereichen 759 sind die Wandelemente 752, 754 gemäß einer Ausführungsform derart konvex geformt, dass diese Endbereiche 759 und die Endbereiche 749 der Seitenwände 741, 743 des Deckelglieds 740 formschlüssig ineinander greifen. Darüber hinaus stehen die Endbereiche 759 der Wandelemente 752, 754 relativ zu einem Endbereich 757 des Deckenelements 715 über, sodass nach der Montage zwischen dem Deckenelement 715 und dem oberen Wandelement 748 des Deckelglieds 740 ein Freiraum (1210 in Fig. 12) ausgebildet ist.

Fig. 8 zeigt den Wischblattausschnitt von Fig. 2 bei der Montage des Anschlussglieds 190 von Fig. 7 an dem lösbar mit dem Führungsadapter 250 von Fig. 2 verbundenen Funktionsadapter 280 gemäß der in Fig. 7 gezeigten Ausgestaltung. Hierbei wird das Befestigungsglied 730 zunächst beispielhaft durch eine Schnappverbindung an dem Funktionsadapter 280 befestigt. Hierzu wird das Befestigungsglied 730 in Richtung eines Pfeils 810 auf den Funktionsadapter 280 aufgeschoben, wobei dessen Wandelemente 714 und 712 (Fig. 7) aus einer Ausgangslage seitlich auswärts elastisch verformt werden, bis das Lagerglied 798 (Fig. 7) in der taschenartigen Ausnehmung 799 (Fig. 7) des Funktionsadapters 280 angeordnet ist und die Welle 738 im Bereich der Öffnungen 724 und 722 (Fig. 7) angeordnet ist. Die Wandelemente 712, 714 bewegen sich nun in ihre Ausgangslage zurück, sodass die axialen Enden der Welle 738 in den Öffnungen 722, 724 aufgenommen werden und somit eine Schnappverbindung zwischen Befestigungsglied 730 und Funktionsadapter 280 hergestellt wird, bei der ein seitliches Verrutschen des Befestigungsglieds 730 durch die Wandelemente 712, 714 verhindert wird.

In einem nächsten Schritt kann das Deckelglied 740 an dem Befestigungsglied 730 bevorzugt über eine Schnappverbindung drehbar befestigt werden. Hierzu wird das Deckelglied 740 z. B. in Richtung des Pfeils 810 auf dessen Verbindungselemente 717, 719 aufgeschoben, die sich hierbei aus einer Ausgangslage elastisch aufeinander zu bewegen, bis an den Seitenwänden 741, 743 des Deckelglieds 740 ausgebildete, stiftförmige Wellenelemente, von denen in Fig. 8 nur das an der Seitenwand 743 ausgebildete Wellenelement 746 sichtbar ist, in die am Befestigungsglied 730 vorgesehenen Öffnungen 732, 734 eingreifen.

In einem weiteren Schritt kann nun das Adapterelement 750 z. B. in Richtung des Pfeils 810 auf das Befestigungsglied 730 aufgeschoben werden. Dies wird unten stehend bei Fig. 12 beschrieben.

Fig. 9 zeigt die Anordnung von Fig. 8 ohne das Adapterelement 750, bei der das Deckelglied 740 am Befestigungsglied 730 durch die in die Öffnungen 742, 744 (Fig. 8) eingreifenden Vorsprünge 737 bzw. 731 (Fig. 8) bevorzugt durch eine Schnappverbindung lösbar verrastet ist. Hierzu wird das Deckelglied 740 zum Herstellen der Schnappverbindung aus seiner in Fig. 8 gezeigten Lage in Richtung eines Pfeils 910 zum Befestigungsglied 730 hin gedreht, um dort zu verrasten.

Fig. 10 zeigt eine Anordnung 1000, bei der beispielhaft ein den Wischerarm 118 von Fig. 1 repräsentierender Wischerarm 1018 des Wischerarmtyps "Top-Lock2" an dem mit dem Deckelglied 740 verbundenen Befestigungsglied 730 angelenkt wird. Der Wischerarm 1018 hat illustrativ einwärts gerichtete Halteschienen 1022, 1024. Zur Vereinfachung der Darstellung sind in Fig. 10 nur der Wischerarm 1018, das Befestigungsglied 730 und das Deckelglied 740 gezeigt.

Der Wischerarm 1018 wird in Richtung von Pfeilen 1052, 1054 auf das Befestigungsglied 730 aufgeschoben, bis dessen seitliche Blockierelemente 785 die Halteschienen 1022, 1024 des Wischerarms 1018 blockieren und somit eine weitere Verschiebung des Wischerarms 1018 in Richtung der Pfeile 1052, 1054 verhindern. Dann wird das Deckelglied 740 wie bei Fig. 9 beschrieben in Richtung eines Pfeils 1099 zum Befestigungsglied 730 hin gedreht, um dort zu verrasten. Hierbei wird bevorzugt eine formschlüssige Verbindung zwischen den konkaven Endbereichen 749 der Seitenwände 741, 743 des Deckelglieds 740 und entsprechend konvex geformter Endbereiche 1012 des Wischerarms 1018 hergestellt, sodass ein Ausrutschen des Wischerarms 1018 in zu den Pfeilen 1052, 1054 entgegen gesetzter Richtung, d. h. in Richtung eines Pfeils 1097, verhindert wird.

Fig. 11 zeigt eine Anordnung 1100, bei der beispielhaft ein den Wischerarm 118 von Fig. 1 repräsentierender Wischerarm 1118 des Wischerarmtyps "Valeo Top-Lock2" an dem mit dem Deckelglied 740 verbundenen Befestigungsglied 730 angelenkt wird. Der Wischerarm 1118 hat illustrativ ein längliches Verbindungsstück 1111, an das eine Haltezunge 1112 mit einer Öffnung 1114 sowie laterale Halteschultern 1116 und 1117 angeformt sind. Zur Vereinfachung der Darstellung sind in Fig. 11 ebenfalls nur der Wischerarm 1118, das Befestigungsglied 730 und das Deckelglied 740 gezeigt.

Der Wischerarm 1118 wird in Richtung von Pfeilen 1152, 1154 auf das Befestigungsglied 730 aufgeschoben, bis dessen laterale Blockierelemente 733, 793 die Halteschultern 1116, 1117 des Wischerarms 1118 blockieren und somit eine weitere Verschiebung des Wischerarms 1118 in Richtung der Pfeile 1152, 1154 verhindern. Dann wird das Deckelglied 740 wie bei Fig. 9 beschrieben in Richtung eines Pfeils 1199 zum Befestigungsglied 730 hin gedreht, um dort zu verrasten. Hierbei wird bevorzugt eine formschlüssige Verbindung zwischen den konkaven Endbereichen 749 der Seitenwände 741, 743 des Deckelglieds 740 und entsprechender Endbereiche 1115 des Wischerarms 1118 hergestellt, sodass ein Ausrutschen des Wischerarms 1118 in zu den Pfeilen 1152, 1154 entgegen gesetzter Richtung, d. h. in Richtung eines Pfeils 1197, verhindert wird.

Fig. 12 zeigt eine Anordnung 1200, bei der beispielhaft ein den Wischerarm 118 von Fig. 1 repräsentierender Wischerarm 1218 des Wischerarmtyps "Side-Lock1" an dem mit dem Deckelglied 740 verbundenen Befestigungsglied 730 angelenkt wird, an dem das Adapterelement 750 befestigt ist. Zur Vereinfachung der Darstellung sind in Fig. 12 nur der Wischerarm 1218, das Befestigungsglied 730, das Deckelglied 740 und das Adapterelement 750 gezeigt.

Das Adapterelement 750 wird zur Befestigung am Befestigungsglied 730 auf dieses aufgeschoben, z. B. in Richtung des Pfeils 810 von Fig. 8, sodass eine Schnappverbindung zwischen diesen Bauteilen hergestellt wird, bei der das Adapterelement 750 das Befestigungsglied 730 zumindest abschnittsweise kappen- und/oder krallenartig umgreift. Diese Schnappverbindung wird dadurch bewirkt, dass die an dem Adapterelement 750 vorgesehenen Haltestege 758, 756 (Fig. 7) unter den Trägerblock 739 des Befestigungsglieds 730 greifen und dort bevorzugt von dessen seitlichen Blockierelementen 785 (Fig. 7) an einer axialen Verschiebung nach - in Fig. 12 - rechts gehindert werden. Eine axiale Verschiebung des Adapterelements 750 nach - in Fig. 12 - links wird durch das wie bei Fig. 9 beschrieben verrastete Deckelglied 740 verhindert, da die konkaven Endbereiche 749 von dessen Seitenwänden 741, 743 formschlüssig gegen die konvexen Endbereiche 759 des Adapterelements 750 anliegen.

Der Wischerarm 1218 hat illustrativ eine Drehwelle 1212 und einen Haltebügel 1214 und wird derart in Richtung eines Pfeils 1251 auf das Anschlussglied 190 aufgeschoben, dass die Drehwelle 1212 wie mit einem gestrichelten Pfeil 1252 angedeutet durch die Öffnungen 755, 736 (Fig. 7) des Adapterelements 750 bzw. des Befestigungsglieds 730 durchgeführt wird. Hierbei wird der Haltebügel 1214 in Fig. 12 über dem Adapterelement 750 positioniert.

Dann wird der Wischerarm 1218 in Richtung eines Pfeils 1299 zum Anschlussglied 190 hin gedreht, sodass der Haltebügel 1214 in der Quernut 751 des Adapterelements 750 aufgenommen wird. Hierbei greift ein an dem Haltebügel 1214 vorgesehener Haltehaken 1244 - in Fig. 12 - hinter das laterale Wandelement 754 des Adapterhalters 750, während der Wischerarm 1218 gegen das laterale Wandelement 752 anliegt, sodass ein Ausrutschen der Drehwelle 1212 aus dem Anschlussglied 190 verhindert wird.

Fig. 13 zeigt eine Anordnung 1300, bei der beispielhaft ein den Wischerarm 118 von Fig. 1 repräsentierender Wischerarm 1318 des Wischerarmtyps "9x3-Haken" oder "9x4-Haken" an dem mit dem Deckelglied 740 verbundenen Befestigungsglied 730 angelenkt wird, an dem das Adapterelement 750 wie bei Fig. 12 beschrieben befestigt ist. Zur Vereinfachung der Darstellung sind in Fig. 13 nur der Wischerarm 1318, das Befestigungsglied 730, das Deckelglied 740 und das Adapterelement 750 gezeigt.

Der Wischerarm 1318 ist illustrativ hakenförmig ausgebildet und hat ein längliches Verbindungsstück 1316, an das über ein Bogenelement 1314 ein Haken 1312 angeformt ist. Zur Befestigung an dem Anschlussglied 190 wird der Wischerarm 1318 in Richtung eines Pfeils 1351 derart an diesem positioniert, dass das längliche Verbindungsstück 1316 in der Längsnut 753 angeordnet ist und das Bogenelement 1314 mit dem Haken 1312 zumindest abschnittsweise über die offene Seite 788 des Deckelglieds 740 in dieses eingreifen. Dann wird der Wischerarm 1318 in Richtung eines Pfeils 1352 verschoben, sodass der Haken 1312 in den Hohlraum 735 des Trägerblocks 739 des Befestigungsglieds 730 eingeführt wird, bis das Bogenelement 1314 gegen den Endbereich 757 von dessen Deckenelement 715 anliegt.

Dann wird das Deckelglied 740 wie bei Fig. 9 beschrieben in Richtung eines Pfeils 1399 zum Befestigungsglied 730 hin gedreht, um dort zu verrasten. Somit wird das Bogenelement 1314 in dem Freiraum 1210 blockiert, sodass ein Ausrutschen des Wischerarms 1318 in einer zu dem Pfeil 1352 entgegen gesetzten Richtung verhindert wird.

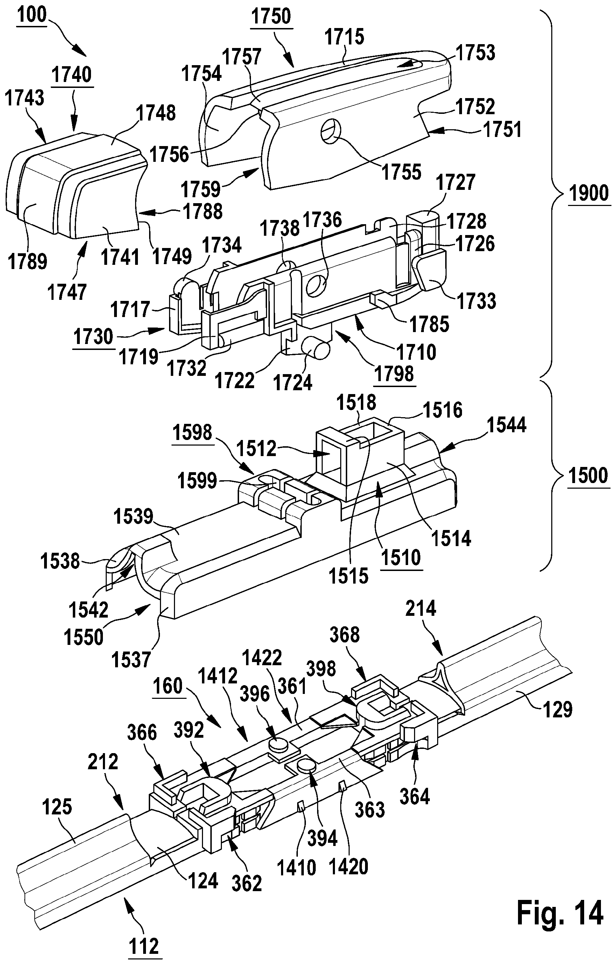

Fig. 14 zeigt einen Ausschnitt des Wischblatts 100 von Fig. 1 mit einer Adaptereinheit 1500 und einem Anschlussglied 1900 gemäß einer Ausführungsform. Die Adaptereinheit 1500 ist bevorzugt zur dauerhaften Befestigung an der mit der Wischleiste 112 verbundenen Basisanschlussvorrichtung 160 ausgebildet. Die Wischleiste 112 und die Basisanschlussvorrichtung 160 sind wie oben bei Fig. 1 bis 3 beschrieben aufgebaut, sodass hier zwecks Knappheit der Beschreibung auf eine erneute Beschreibung verzichtet wird.

Im Gegensatz zu der bei den Fig. 2 bis 13 beschriebenen Adaptereinheit 150 ist die Adaptereinheit 1500 bevorzugt einstückig und z. B. aus Kunststoff ausgebildet. Es wird jedoch darauf hingewiesen, dass auch andere Werkstoffe Anwendung finden können. Die Adaptereinheit 1500 ist beispielhaft mit einer Formgebung nach Art eines U-Boots ausgestaltet und hat ein Deckenelement 1539, an dem zwei laterale Wandelemente 1537, 1538 angeformt sind. Zur dauerhaften Befestigung der Adaptereinheit 1500 an der Basisanschlussvorrichtung 160 sind deren Unterseite 1550 und die einander zugewandten Innenseiten der lateralen Wandelemente 1537, 1538 z. B. wie die Unterseite 499 bzw. die Wandelemente 337, 338 des Führungsadapters 250 von Fig. 3 und 4 ausgebildet. Dementsprechend sind gemäß einer Ausführungsform an den Wandelementen 1537, 1538 Haltearme vorgesehen, die den Haltearmen 322, 324, 326, 328 von Fig. 3 und 4 entsprechen und an der Unterseite 1550 sind taschenartige Aufnahmeelemente ausgebildet, die den Aufnahmeelementen 412, 414, 416, 418 von Fig. 4 entsprechen.

Es wird jedoch darauf hingewiesen, dass auch andere Befestigungsarten zur dauerhaften Befestigung der Adaptereinheit 1500 an der Basisanschlussvorrichtung 160 möglich sind. Z. B. können an der Unterseite 1550 der Adaptereinheit 1500 Rasthaken vorgesehen sein, die an Rastnasen 1410, 1420, 1412, 1422 verrastbar sind, die illustrativ an der Basisanschlussvorrichtung 160 ausgebildet sind.

Am Deckenelement 1539 der Adaptereinheit 1550 ist beispielhaft ein Lagerelement 1598 ausgebildet, an dem das Anschlussglied 1900 lagerbar ist. Das Lagerelement 1598 hat beispielhaft eine taschenartige Lageraufnahme 1599. Es wird jedoch darauf hingewiesen, dass das Lagerelement 1598 mit der Aufnahme 1599 in Fig. 14 lediglich beispielhaft abgebildet ist und nicht zur Einschränkung der Erfindung. Vielmehr kann das Lagerelement 1598 eine Vielzahl unterschiedlicher Ausgestaltungen aufweisen, die von einer Ausgestaltung des Anschlussglieds 1900 abhängig sein können. Z. B. kann das Lagerelement 1598 wie das Lagerelement 279 von Fig. 2 ausgebildet sein.

An einem in Fig. 14 links gezeigten axialen Endbereich der Adaptereinheit 1500 ist zumindest bereichsweise eine Aufnahmenut 1542 zur Aufnahme eines ersten Endbereichs 212 des Spoilers 125 des Wischblatts 100 ausgebildet. An seinem in Fig. 2 rechts gezeigten axialen Endbereich ist zumindest bereichsweise eine Aufnahmenut 1544 zur Aufnahme eines zweiten Endbereichs 214 des Spoilers 125 ausgebildet.

Gemäß einer Ausführungsform ist darüber hinaus am Deckenelement 1539 ein turmartiges Führungs- und Positionierglied 1510 zur vereinfachten Ausrichtung des Anschlussglieds 1900 an der Adaptereinheit 1500 ausgebildet, das zwei Wandelemente 1514, 1518 aufweist, die über eine Abschlusswand 1516 und ein Trägerteil 1515 miteinander verbunden sind. Das Trägerteil 1515 kann das Führungs- und Positionierglied 1510 wie in Fig. 14 gezeigt nur abschnittsweise abdecken, oder auch vollständig. Eine der Abschlusswand 1516 gegenüber liegende Seitenfläche 1512 des Führungs- und Positionierglieds 1510 ist offen.

Das Anschlussglied 1900 weist beispielhaft ein an der Adaptereinheit 1500 lagerbares Basiselement 1730 auf, das mit einem Deckelglied 1740 und einem Adapterelement 1750 verbindbar ist. Das Basiselement 1730 ist bevorzugt über eine Schnappverbindung an der Adaptereinheit 1500 befestigbar und wird deshalb nachfolgend auch als "Befestigungsglied" bezeichnet. Gemäß einer Ausführungsform sind das Befestigungsglied 1730, das Deckelglied 1740 und das Adapterelement 1750 aus Kunststoff hergestellt, z. B. durch Kunststoffspritzen. Es können jedoch auch andere Herstellungsverfahren und Werkstoffe bzw. Werkstoffkombinationen Anwendung finden.

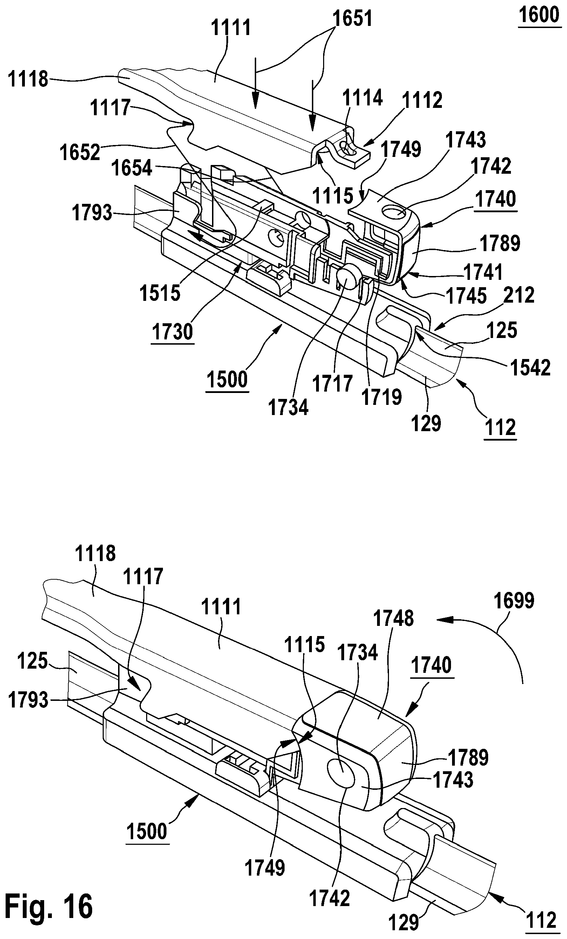

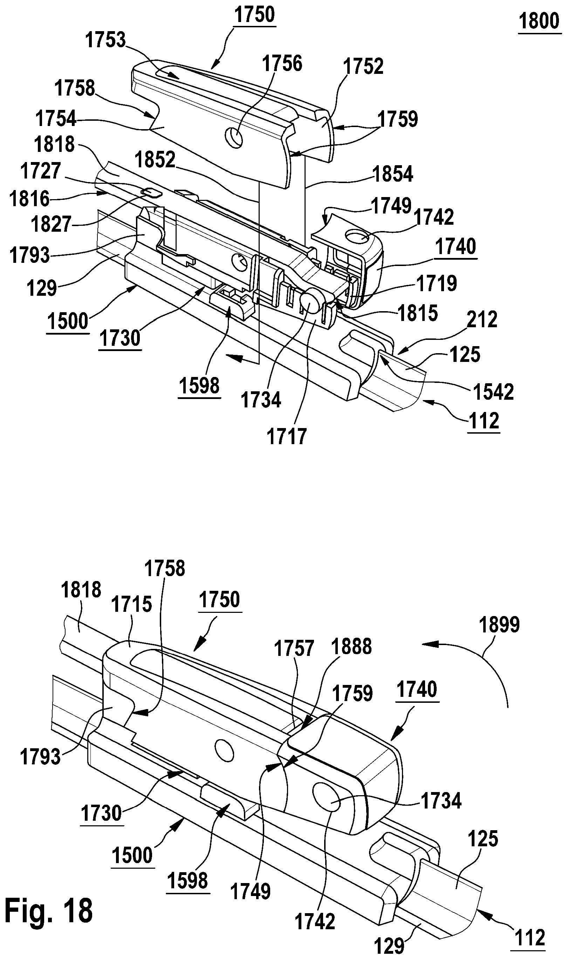

Das Befestigungsglied 1730 ist beispielhaft zur Anlenkung an eine erste Vielzahl unterschiedlicher Wischerarmtypen ausgebildet, wie unten stehend bei Fig. 16 bis 18 beschrieben. Das Adapterelement 1750 ist beispielhaft zur Anlenkung an eine zweite Vielzahl unterschiedlicher Wischerarmtypen ausgebildet, die sich zumindest teilweise von den Wischerarmtypen der ersten Vielzahl von Wischerarmtypen unterscheiden, wie unten stehend bei Fig. 18 bis 20 beschrieben. Das Deckelglied 1740 ist beispielhaft zur Fixierung von unterschiedlichen Wischerarmtypen an dem Befestigungsglied 1730 bzw. dem Adapterelement 1750 ausgebildet.

Gemäß einer Ausführungsform ist an einer Unterseite 1710 des Befestigungsglieds 1730 ein Lagerglied 1798 mit einer Formgebung vorgesehen, die beispielhaft der Formgebung der taschenartigen Lageraufnahme 1599 entspricht, um z. B. die Herstellung der Schnappverbindung zwischen diesen Bauteilen zu ermöglichen. Das Lagerglied 1798 weist eine Welle 1724 auf, die bevorzugt zur Verrastung in der Lageraufnahme 1599 ausgebildet ist, und kann eine oder mehrere, z. B. wandartige Positionierhilfen 1722 aufweisen. Alternativ hierzu können anstelle einer durchgehenden Welle 1724 auch zwei stift- bzw. zylinderförmige, laterale Vorsprünge am Befestigungsglied 1730 ausgebildet sein.

An das Lagerglied 1798 sind beispielhaft Wandelemente 1726, 1728 angeformt, die mit kreisförmigen Öffnungen 1736 bzw. 1738 versehen sind. Zwischen den Wandelementen 1726, 1728 ist im Lagerglied 1798 eine Durchbrechung 1710 ausgebildet, deren Abmessungen den Abmessungen des turmartigen Führungs- und Positionierglieds 1510 entsprechen, damit dieses durch die Durchbrechung 1710 durchführbar ist.

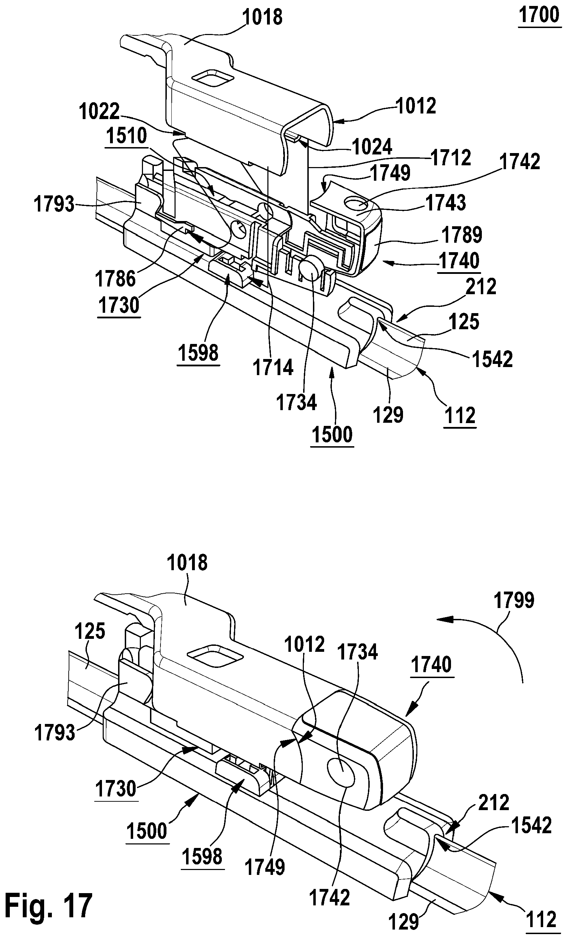

Am in Fig. 14 rechten axialen Endbereich der Wandelemente 1726, 1728 sind laterale Blockierglieder 1733 bzw. 1793 (Fig. 16 bis 20) und ein illustrativer Positionierstift bzw. -knopf 1727 ausgebildet, sowie seitliche Blockierglieder 1785 bzw. 1786 (Fig. 17). Am in Fig. 14 linken axialen Endbereich der Wandelemente 1726, 1728 sind laterale Verbindungsglieder 1719 bzw. 1717 angeformt. Das Verbindungsglied 1719 hat beispielhaft eine Lagerwelle 1732 zur drehbaren Lagerung des Deckelglieds 1740. Am Verbindungsglied 1717 ist illustrativ ein Rastzapfen 1734 zur lösbaren Verrastung des Deckelglieds 1740 vorgesehen.

Das Deckelglied 1740 ist beispielhaft nach Art einer würfelförmigen Haube ausgebildet, mit einem oberen Wandelement 1748 und Seitenwänden 1741, 1743, die über eine Abschlusswand 1789 miteinander verbunden sind. Die dem oberen Wandelement 1748 und der Abschlusswand 1789 gegenüberliegenden Seiten 1747 bzw. 1788 sind offen. Die der offenen Seite 1788 zugewandten Endbereiche 1749 der Seitenwände 1741, 1743 sind illustrativ konkav geformt. Gemäß einer Ausführungsform ist das Deckelglied 1740 zur Fixierung des Adapterelements 1750 am Befestigungsglied 1730 ausgebildet.

Das Adapterelement 1750 ist beispielhaft als Hohl- oder U-Profil mit einem Deckenelement 1715 ausgebildet, an dem zwei laterale Wandelemente 1752, 1754 angeformt sind. Das Deckenelement 1715 ist mindestens mit einer Längsnut 1753 ausgebildet, kann aber wie das Adapterlement 750 von Fig. 7 auch mit einer Quernut (751 in Fig. 7) versehen sein. Die Wandelemente 1752, 1754 weisen bevorzugt kreisförmige Öffnungen 1755 bzw. 1756 auf.

An den in Fig. 14 rechten axialen Endbereichen der Wandelemente 1752, 1754 sind laterale Anschlagelemente 1751 bzw. 1758 (Fig. 18 bis 20) ausgebildet. An ihren in Fig. 14 linken axialen Endbereichen 1759 sind die Wandelemente 1752, 1754 gemäß einer Ausführungsform derart konvex geformt, dass diese Endbereiche 1759 und die Endbereiche 1749 der Seitenwände 1741, 1743 des Deckelglieds 1740 formschlüssig ineinander greifen. Darüber hinaus stehen die Endbereiche 1759 der Wandelemente 1752, 1754 relativ zu einem Endbereich 1757 des Deckenelements 1715 über, sodass nach der Montage zwischen dem Deckenelement 1715 und dem oberen Wandelement 1748 des Deckelglieds 1740 ein Freiraum (1888 in Fig. 18) ausgebildet ist.

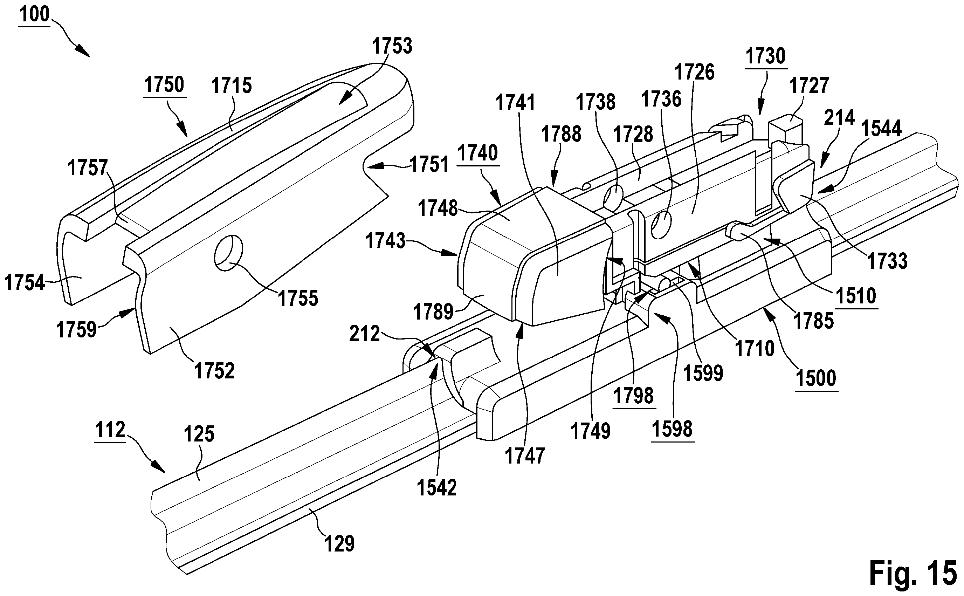

Fig. 15 zeigt den Wischblattausschnitt von Fig. 14 bei der Montage des Anschlussglieds 1900 an der dauerhaft mit der Basisanschlussvorrichtung 160 verbundenen Adaptereinheit 1500. Hierbei wird das Befestigungsglied 1730 zunächst auf die Adaptereinheit 1500 aufgeschoben, um diese Bauteile aneinander zu befestigen, wobei das Lagerglied 1798 in der taschenartigen Lageraufnahme 1599 (Fig. 14) angeordnet und fixiert wird. Durch die in Fig. 14 gezeigte Ausgestaltung des Lagerelements 1598 kann ein seitliches Verrutschen des Befestigungsglieds 1730 verhindert werden.

In einem nächsten Schritt kann das Deckelglied 1740 an dem Befestigungsglied 1730 bevorzugt über eine Schnappverbindung drehbar befestigt werden, wie beispielhaft unten bei Fig. 16 beschrieben. Dann kann das Adapterelement 1750 auf das Befestigungsglied 1730 aufgeschoben werden, wie beispielhaft unten bei Fig. 18 beschrieben.

Fig. 16 zeigt eine Anordnung 1600, bei der beispielhaft der den Wischerarm 118 von Fig. 1 repräsentierende Wischerarm 1118 des Wischerarmtyps "Valeo Top-Lock2" von Fig. 11 an dem mit dem Deckelglied 1740 verbundenen Befestigungsglied 1730 angelenkt wird. Das Deckelglied 1740 weist gemäß einer Ausführungsform krallenartige Fixierelemente 1745 auf, die bevorzugt mittels einer Schnappverbindung derart an der Lagerwelle 1732 des Befestigungsglieds 1730 verrastbar sind, dass das Deckelglied 1740 um die Lagerwelle 1732 drehbar ist, wobei die von der Lagerwelle 1732 definierte Drehachse etwa parallel zur axialen Erstreckung der Wischleiste 112 liegt.

Wie in Fig. 16 verdeutlicht, wird der Wischerarm 1118 zunächst in Richtung von Pfeilen 1651 bzw. 1652 und 1654 auf das Befestigungsglied 1730 aufgeschoben, bis dessen laterale Blockierglieder 1733, 1793 die Halteschultern 1116 (Fig. 11), 1117 des Wischerarms 1118 blockieren und somit eine weitere Verschiebung des Wischerarms 1118 in Richtung der Pfeile 1652, 1654 verhindern. Dann wird das Deckelglied 1740 zur Herstellung einer Schnappverbindung in Richtung eines Pfeils 1699 zum Befestigungsglied 1730 hin gedreht, sodass der Rastzapfen 1734 in eine in der Seitenwand 1743 vorgesehene Öffnung 1742 eingreift, um dort lösbar zu verrasten. Hierbei wird bevorzugt eine formschlüssige Verbindung zwischen den konkaven Endbereichen 1749 der Seitenwände 1741, 1743 des Deckelglieds 1740 und entsprechender Endbereiche 1115 des Wischerarms 1118 hergestellt, sodass ein Ausrutschen des Wischerarms 1118 in zu den Pfeilen 1652, 1654 entgegen gesetzter Richtung verhindert wird.

Fig. 17 zeigt eine Anordnung 1700, bei der beispielhaft der den Wischerarm 118 von Fig. 1 repräsentierende Wischerarm 1018 des Wischerarmtyps "Top-Lock2" von Fig. 10 an dem mit dem Deckelglied 740 verbundenen Befestigungsglied 730 angelenkt wird. Hierzu wird der Wischerarm 1018 in Richtung von Pfeilen 1712, 1714 auf das Befestigungsglied 1730 aufgeschoben, bis dessen seitliche Blockierelemente 1785 (Fig. 14), 1786 die Halteschienen 1022, 1024 des Wischerarms 1018 blockieren und somit eine weitere Verschiebung des Wischerarms 1018 in Richtung der Pfeile 1712, 1714 verhindern. Dann wird das Deckelglied 1740 wie bei Fig. 16 beschrieben in Richtung eines Pfeils 1799 zum Befestigungsglied 1730 hin gedreht, um dort zu verrasten. Hierbei wird bevorzugt eine formschlüssige Verbindung zwischen den konkaven Endbereichen 1749 der Seitenwände 1741, 1743 des Deckelglieds 1740 und entsprechend konvex geformter Endbereiche 1012 des Wischerarms 1018 hergestellt, sodass ein Ausrutschen des Wischerarms 1018 in zu den Pfeilen 1712, 1714 entgegen gesetzter Richtung verhindert wird.

Fig. 18 zeigt eine Anordnung 1800, bei der beispielhaft ein den Wischerarm 118 von Fig. 1 repräsentierender Wischerarm 1818 des Wischerarmtyps "Valeo Top-Lock3" an dem mit dem Deckelglied 1740 verbundenen Befestigungsglied 1730 angelenkt wird. Der Wischerarm 1818 hat beispielhaft ein Längselement 1816 mit einer Positionieröffnung 1827 und einem abgebogenen bzw. abgewinkelten Endstück 1815. Fig. 18 verdeutlicht einen zwischen Endbereich 1757 des Deckenelements 1715 und Deckelglied 1740 ausgebildeten Freiraum 1888.

Wie in Fig. 18 gezeigt, wird der Wischerarm 1818 zunächst auf dem Befestigungsglied 1730 und dem Deckelglied 1740 positioniert, sodass das Endstück 1815 im Bereich der Verbindungsglieder 1717, 1719 angeordnet ist und der Positionierstift bzw. -knopf 1727 des Befestigungsglieds 1730 zumindest abschnittsweise in die Positionieröffnung 1827 des Wischerarms 1818 eingreift. Dann wird das Adapterelement 1750 in Richtung von Pfeilen 1852, 1854 über den Wischerarm 1818 auf das Befestigungsglied 1730 aufgeschoben, bis dessen laterale Blockierglieder 1733, 1793 die lateralen Anschlagelemente 1758 bzw. 1751 (Fig. 14) des Adapterelements 1750 blockieren und somit eine weitere Verschiebung des Adapterelements 1750 in Richtung der Pfeile 1852, 1854 verhindern. Das Adapterelement 1750 umgreift somit zumindest abschnittsweise kappenartig das Befestigungsglied 1730.

Dann wird das Deckelglied 1740 wie bei Fig. 16 beschrieben in Richtung eines Pfeils 1899 zum Befestigungsglied 1730 hin gedreht, um dort zu verrasten. Hierbei wird bevorzugt eine formschlüssige Verbindung zwischen den konkaven Endbereichen 1749 der Seitenwände 1741, 1743 des Deckelglieds 1740 und den Endbereichen 1759 des Adapterelements 1750 hergestellt, sodass ein Ausrutschen des Wischerarms 1818 in zu den Pfeilen 1852, 1854 entgegen gesetzter Richtung verhindert wird.

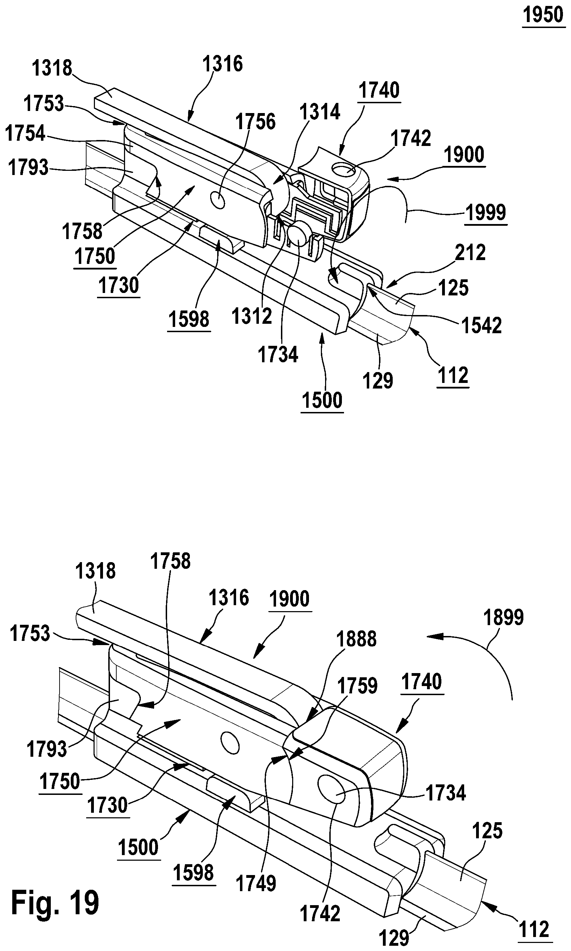

Fig. 19 zeigt eine Anordnung 1950, bei der beispielhaft der den Wischerarm 118 von Fig. 1 repräsentierende Wischerarm 1318 des Wischerarmtyps "9x3-Haken" oder "9x4-Haken" von Fig. 13 an dem mit dem Deckelglied 1740 verbundenen Befestigungsglied 1730 angelenkt wird, an dem das Adapterelement 1750 wie bei Fig. 18 beschrieben befestigt ist. Zur Befestigung an dem Anschlussglied 1900 wird der Wischerarm 1318 ähnlich wie bei Fig. 13 beschrieben derart an diesem positioniert, dass das längliche Verbindungsstück 1316 in der Längsnut 1753 angeordnet ist und der Haken 1312 unter dem Trägerteil 1515 durch in das turmartige Führungs- und Positionierglied 1510 von Fig. 14 eingreift, sodass das Bogenelement 1314 gegen den Endbereich 1757 des Deckenelements 1715 von Fig. 14 anliegt.

Dann wird das Deckelglied 1740 wie bei Fig. 16 beschrieben in Richtung eines Pfeils 1999 zum Befestigungsglied 1730 hin gedreht, um dort zu verrasten. Somit wird das Bogenelement 1314 in dem Freiraum 1888 blockiert, sodass ein Ausrutschen des Wischerarms 1318 aus dem Anschlussglied 1900 verhindert wird.

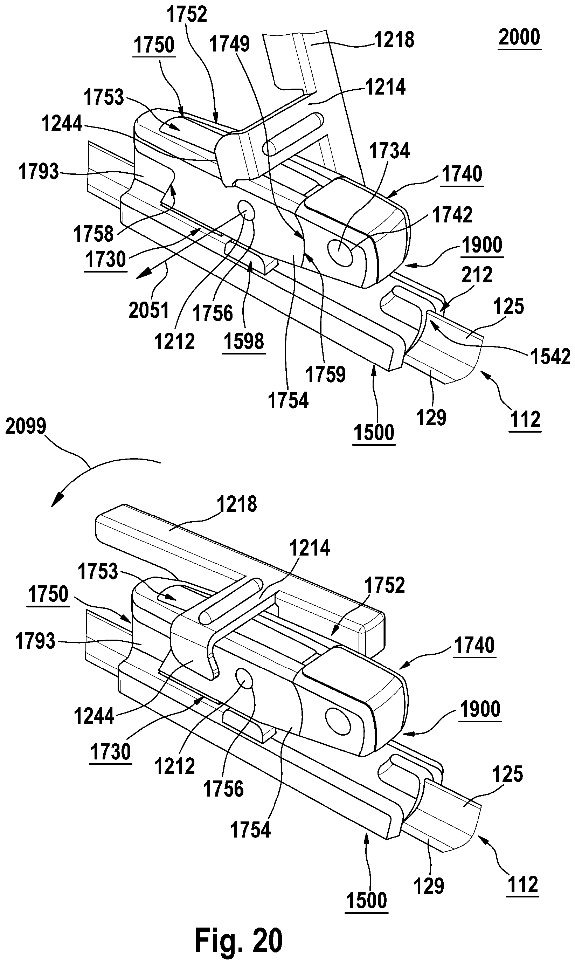

Fig. 20 zeigt eine Anordnung 2000, bei der beispielhaft der den Wischerarm 118 von Fig. 1 repräsentierende Wischerarm 1218 des Wischerarmtyps "Side-Lock1" von Fig. 12 an dem mit dem Deckelglied 1740 verbundenen Befestigungsglied 1730 angelenkt wird, an dem das Adapterelement 1750 wie bei Fig. 18 beschrieben befestigt ist.

Der Wischerarm 1218 wird illustrativ derart in Richtung eines Pfeils 2051 auf das Anschlussglied 1900 aufgeschoben, dass die Drehwelle 1212 wie durch die Öffnungen 1756, 1755 (Fig. 14) des Adapterelements 1750 bzw. 1738, 1736 (Fig. 15) des Befestigungsglieds 1730 durchgeführt wird. Hierbei wird der Haltebügel 1214 in Fig. 20 über dem Adapterelement 1750 positioniert.

Dann wird der Wischerarm 1218 in Richtung eines Pfeils 2099 zum Anschlussglied 1900 hin gedreht, sodass der an dem Haltebügel 1214 vorgesehene Haltehaken 1244 - in Fig. 20 - vor das laterale Wandelement 1754 des Adapterhalters 1750 greift, während der Wischerarm 1218 gegen das laterale Wandelement 1752 anliegt, sodass ein Ausrutschen der Drehwelle 1212 aus dem Anschlussglied 1900 verhindert wird.

## Patentansprüche

1. Wischblatt (100) für einen Scheibenwischer, mit einer Wischleiste (112) und einer Adaptereinheit (1500) zur Anlenkung der Wischleiste (112) an einem Wischerarm (1018, 1118, 1218, 1318, 1818), wobei die Adaptereinheit (1500) zur Verbindung mit einem dem Wischerarm (1018, 1118, 1218, 1318, 1818) zugeordneten Anschlussglied (1900) ausgebildet ist, wobei das Anschlussglied (1900) ein Basiselement (1730) und ein Adapterelement (1750) aufweist, wobei das Basiselement (1730) zur Anlenkung der Wischleiste (112) an eine erste Vielzahl unterschiedlicher Wischerarmtypen (1018, 1118, 1818) ausgebildet ist und mit dem Adapterelement (1750) verbindbar ist, um eine Anlenkung der Wischleiste (112) an eine zweite Vielzahl unterschiedlicher Wischerarmtypen (1218, 1318, 1818) zu ermöglichen, die sich von den Wischerarmtypen der ersten Vielzahl von Wischerarmtypen (1018, 1118, 1818) zumindest teilweise unterscheiden, **dadurch gekennzeichnet, dass** das Anschlussglied (1900) ein Deckelglied (1740) aufweist, mit dem das Adapterelement (1750) an dem Basiselement (1730) fixierbar ist, wobei das Deckelglied (1740) krallenartige Fixierelemente (1745) aufweist, die an einer Lagerwelle (1732) des Basiselements (1730) verrastbar sind, dass das Deckelglied (1740) um die Lagerwelle (1732) drehbar ist, wobei die von der Lagerwelle (1732) definierte Drehachse etwa parallel zur axialen Erstreckung der Wischleiste (112) liegt.

2. Wischblatt nach Anspruch 1, **dadurch gekennzeichnet, dass** das Adapterelement (1750) dazu ausgebildet ist, das Basiselement (1730) zumindest abschnittsweise kappenartig zu umgreifen.

3. Wischblatt nach Anspruch 1, **dadurch gekennzeichnet, dass** das Deckelglied (1740) zur Fixierung einer Mehrzahl unterschiedlicher Wischerarmtypen (1018, 1118, 1318, 1818) an dem Anschlussglied (1900) ausgebildet ist.

4. Wischblatt nach einem der vorhergehenden Ansprüche, **dadurch gekennzeichnet, dass** die Adaptereinheit (1500) ein Lagerelement (1598) aufweist, an dem das Anschlussglied (1900) lagerbar ist.

5. Wischblatt nach Anspruch 4, **dadurch gekennzeichnet, dass** das Anschlussglied (1900) Positionierhilfen (1722) zur Positionierung am Lagerelement (1598) aufweist.

6. Wischblatt nach einem der vorhergehenden Ansprüche, **dadurch gekennzeichnet, dass** die Adaptereinheit (1500) ein Führungs- und Positionierglied (1510) zur Ausrichtung des Anschlussglieds (1900) an der Adaptereinheit (1500) aufweist.

7. Wischblatt nach Anspruch 6, **dadurch gekennzeichnet, dass** das Führungs- und Positionierglied (1510) turmartig ausgebildet ist und das Anschlussglied (1900) eine Durchbrechung (1710) zur Durchführung des turmartigen Führungs- und Positionierglieds (1510) aufweist.

8. Wischblatt nach einem der vorhergehenden Ansprüche, **dadurch gekennzeichnet, dass** die Adaptereinheit (1500) dauerhaft an einer an der Wischleiste (112) vorgesehenen Basisanschlussvorrichtung (160) befestigbar ist.

## Claims

1. Wiper blade (100) for a screen wiper, having a wiper strip (112) and an adapter unit (1500) for articulating the wiper strip (112) on a wiper arm (1018, 1118, 1218, 1218, 1818), wherein the adapter unit (1500) is configured for connecting to a connecting member (1900) which is assigned to the wiper arm (1018, 1118, 1218, 1318, 1818), wherein the connecting member (1900) has a base element (1730) and an adapter element (1750), wherein the base element (1730) is configured for articulating the wiper strip (112) on a first multiplicity of different wiper arm types (1018, 1118, 1818) and, for enabling the wiper strip (112) to be articulated on a second multiplicity of different wiper arm types (1218, 1318, 1818) which are at least partially different from the wiper arm types of the first multiplicity of wiper arm types (1018, 1118, 1818), is connectable to the adapter element (1750), **characterized in that** the connecting member (1900) has a cover member (1740) by way of which the adapter element (1750) is able to be fixed to the base element (1730), wherein the cover member (1740) has claw-type fixing elements (1745) which are able to be latched to a bearing shaft (1732) of the base element (1730), **in that** the cover member (1740) is rotatable about the bearing shaft (1732), wherein the rotation axis defined by the bearing shaft (1732) lies approximately parallel to the axial extent of the wiper strip (112).

2. Wiper blade according to Claim 1, **characterized in that** the adapter element (1750) is configured for encompassing in a cap-like manner the base element (1730) at least in portions.

3. Wiper blade according to Claim 1, **characterized in that** the cover member (1740) is configured for fixing a plurality of different wiper arm types (1018, 1118, 1318, 1818) to the connecting member (1900).

4. Wiper blade according to one of the preceding claims, **characterized in that** the adapter unit (1500) has a bearing element (1598) on which the connecting member (1900) is able to be mounted.

5. Wiper blade according to Claim 4, **characterized in that** the connecting member (1900) has positioning aids (1722) for positioning on the bearing element (1598).

6. Wiper blade according to one of the preceding claims, **characterized in that** the adapter unit (1500) has a guiding and positioning member (1510) for aligning the connecting member (1900) on the adapter unit (1500).

7. Wiper blade according to Claim 6, **characterized in that** the guiding and positioning member (1510) is configured in the manner of a turret, and the connecting member (1900) has an aperture (1710) for passing through the turret-type guiding and positioning member (1510).

8. Wiper blade according to one of the preceding claims, **characterized in that** the adapter unit (1500) is able to be permanently fastened to a base connecting device (160) which is provided on the wiper strip (112).

## Revendications

1. Balai d'essuie-glace (100) pour un essuie-glace, comprenant une raclette de balai d'essuie-glace (112) et une unité d'adaptateur (1500) pour l'articulation de la raclette de balai d'essuie-glace (112) à un bras d'essuie-glace (1018, 1118, 1218, 1318, 1818), l'unité d'adaptateur (1500) étant réalisée pour être connectée à un organe de raccordement (1900) associé au bras d'essuie-glace (1018, 1118, 1218, 1318, 1818), l'organe de raccordement (1900) présentant un élément de base (1730) et un élément d'adaptateur (1750), l'élément de base (1730) étant réalisé pour l'articulation de la raclette de balai d'essuie-glace (112) à une première pluralité de types de bras d'essuie-glace différents (1018, 1118, 1818) et pouvant être connecté à l'élément d'adaptateur (1750) afin de permettre une articulation de la raclette de balai d'essuie-glace (112) à une deuxième pluralité de types de bras d'essuie-glace différents (1218, 1318, 1818) qui sont au moins en partie différents des types de bras d'essuie-glace de la première pluralité de types de bras d'essuie-glace (1018, 1118, 1818), **caractérisé en ce que** l'organe de raccordement (1900) présente un organe de recouvrement (1740) avec lequel l'élément d'adaptateur (1750) peut être fixé à l'élément de base (1730), l'organe de recouvrement (1740) présentant des éléments de fixation en forme de griffe (1745) qui peuvent être encliquetés sur un arbre de palier (1732) de l'élément de base (1730), **en ce que** l'organe de recouvrement (1740) peut tourner autour de l'arbre de palier (1732), l'axe de rotation défini par l'arbre de palier (1732) s'étendant approximativement parallèlement à l'étendue axiale de la raclette de balai d'essuie-glace (112).

2. Balai d'essuie-glace selon la revendication 1, **caractérisé en ce que** l'élément d'adaptateur (1750) est réalisé pour venir en prise au moins en partie en forme de capuchon autour de l'élément de base (1730).

3. Balai d'essuie-glace selon la revendication 1, **caractérisé en ce que** l'organe de recouvrement (1740) est réalisé pour la fixation d'une pluralité de types de bras d'essuie-glace différents (1018, 1118, 1318, 1818) à l'organe de raccordement (1900).

4. Balai d'essuie-glace selon l'une quelconque des revendications précédentes, **caractérisé en ce que** l'unité d'adaptateur (1500) présente un élément de palier (1598) sur lequel peut être supporté l'organe de raccordement (1900).

5. Balai d'essuie-glace selon la revendication 4, **caractérisé en ce que** l'organe de raccordement (1900) présente des auxiliaires de positionnement (1722) pour le positionnement sur l'élément de palier (1598).

6. Balai d'essuie-glace selon l'une quelconque des revendications précédentes, **caractérisé en ce que** l'unité d'adaptateur (1500) présente un organe de guidage et de positionnement (1510) pour l'orientation de l'organe de raccordement (1900) sur l'unité d'adaptateur (1500).

7. Balai d'essuie-glace selon la revendication 6, **caractérisé en ce que** l'organe de guidage et de positionnement (1510) est réalisé en forme de tour et l'organe de raccordement (1900) présente un orifice (1710) pour le passage de l'organe de guidage et de positionnement en forme de tour (1510).

8. Balai d'essuie-glace selon l'une quelconque des revendications précédentes, **caractérisé en ce que** l'unité d'adaptateur (1500) peut être fixée de manière durable à un dispositif de raccordement de base (160) prévu sur la raclette de balai d'essuie-glace (112).
